# EUROPÄISCHE PATENTANMELDUNG

(11) **EP 4 443 739 A1**
(43) Veröffentlichungstag der Anmeldung: **09.10.2024**
(21) Anmeldenummer: 24165880.6
(22) Anmeldetag: 25.03.2024
(51) Int. Cl.: H02S 20/10, F24S 25/50

(54) **VORRICHTUNG ZUM TRAGEN VON ENERGIEGEWINNUNGSMODULEN UND ANORDNUNG ZUM TRAGEN VON ENERGIEGEWINNUNGSMODULEN**

(30) Priorität: 06.04.2023 DE 102023108899
(71) Anmelder: Gehrlicher, Klaus, 85540 Haar (DE)
(72) Erfinder: Gehrlicher, Klaus, 85540 Haar (DE)
(74) Vertreter: Thum, Bernhard

(57) **Zusammenfassung**

Die Erfindung betrifft eine Vorrichtung (10) zum Tragen von Energiegewinnungsmodulen (78, 80, 96), insbesondere Solarmodulen, umfassend:
- eine erste Stützanordnung (12);
- eine zweite Stützanordnung (14); und
- eine Tragseilanordnung (16) umfassend zumindest einen ersten Tragseilabschnitt (18) und einen zweiten Tragseilabschnitt (20), wobei der erste und der zweite Tragseilabschnitt (18, 20) jeweils zwischen der ersten und der zweiten Stützanordnung (12, 14) zumindest abschnittsweise freitragend verlaufen und die erste und die zweite Stützanordnung (12, 14) miteinander verbinden;
wobei die erste und die zweite Stützanordnung (12, 14) dazu eingerichtet sind, die Tragseilanordnung (16) gegenüber einem Untergrund (114) derart zu halten, dass die Tragseilanordnung (16) zumindest im Bereich zwischen der ersten und der zweiten Stützanordnung (12, 14) beabstandet zu dem Untergrund (114) angeordnet ist; und
wobei wenigstens ein Energiegewinnungsmodul (78, 80, 96) an der Tragseilanordnung (16) zwischen der ersten und der zweiten Stützanordnung (12, 14) gehalten ist.

## Beschreibung

Die Erfindung betrifft eine Vorrichtung zum Tragen von Energiegewinnungsmodulen und ferner eine Anordnung zum Tragen von Energiegewinnungsmodulen.

Es ist bekannt, Energiegewinnungsmodule, insbesondere Solarmodule, für die Gewinnung von erneuerbarer Energie einzusetzen. Solarmodule sind dazu eingerichtet, Energie aus dem Licht der Sonne aufzunehmen und/oder in andere Energieformen umzuwandeln. Zu solchen Solarmodulen können Photovoltaikmodule, Photovoltaik-Röhren, Solarthermie-Kollektoren, Solarthermie-Röhren, Solarthermiemodule usw. gehören. Die Energiegewinnungsmodule sind dabei üblicherweise auf in sich starren Tragekonstruktionen (sog. "Modultischen") angeordnet, die beispielsweise die Energiegewinnungsmodule auf einem Gebäudedach oder gegenüber dem Boden anordnen. Die Modultische können dabei starr mit dem Untergrund verbunden sein oder durch eine entsprechende Nachführungskonstruktion ein- oder zweiachsig drehbar gelagert sein, um dem Sonnenstand zu folgen.

Im Rahmen der Energiewende wird angestrebt, den Anteil an erneuerbaren Energien massiv auszubauen. Für den Ausbau von beispielsweise Photovoltaikanlagen bedeutet dies, möglichst viele Flächen zu erschließen bzw. erschließbar zu machen, auf denen Photovoltaikmodule angeordnet werden können. Neben Gebäudedächern besteht ein Lösungsansatz darin, Photovoltaikmodule auf sogenannten Freiflächen anzuordnen. Solche Freiflächen können sowohl versiegelte Flächen wie zum Beispiel Straßen, Parkplätze, Deponieflächen oder sonstige Industrieflächen als auch unversiegelte Freiflächen wie beispielsweise intensiv oder extensiv landwirtschaftlich genutzte Flächen, Moorflächen, Flüsse, Wasserspeicher, Seen und dergleichen oder sonstige unverbaute Flächen sein. Bisherige Lösungen von sogenannten Freiflächen-Photovoltaikanlagen sind jedoch mit beträchtlichen Nachteilen verbunden, denn häufig sind die Freiflächen aufgrund der Nutzung für die Energiegewinnung dann nicht mehr oder nur noch eingeschränkt ihrer ursprünglichen Bestimmung gemäß nutzbar. Ein wesentlicher Grund dafür sind sperrige Tragekonstruktionen mit vielen Stützen, die großflächig die Photovoltaikmodule in der notwendigen Ausrichtung und in niedriger Höhe auf den Freiflächen anordnen. Landwirtschaftliche Maschinen können dann zum Beispiel nicht mehr oder nur noch sehr eingeschränkt auf der Freifläche eingesetzt werden.

Ein weiterer Nachteil von bisher bekannten Tragekonstruktionen ist, dass diese sehr massiv ausgeführt sind, um die notwendige Steifigkeit zum Tragen von Energiegewinnungsmodulen zu erreichen. Insbesondere ist bislang eine (material-)aufwändige Konstruktion notwendig, wenn die Tragekonstruktionen besonders hoch und/oder mit besonders großen Stützenweiten (Spannweiten) ausgebildet sein soll, um die bisherige oder geplante Nutzungsart der Freifläche nicht zu behindern, z.B. eine Durchfahrt von landwirtschaftlichen Maschinen unter den Energiegewinnungsmodulen zu ermöglichen. Neben dem hohen Ressourcenverbrauch für diese massiven Tragkonstruktionen fallen für diese auch hohe Kosten an, welche die Wirtschaftlichkeit beispielsweise einer solchen Freiflächen-Photovoltaikanlage erheblich beeinträchtigen können.

Im Zusammenhang mit Gebäudedächern besteht ein weiteres Problem darin, dass nicht alle Gebäudedächer in der Fläche die notwendigen statischen Reserven aufweisen, um Energiegewinnungsmodule und die notwendigen Tragekonstruktionen zu tragen. Es liegen somit bereits versiegelte, allerdings für die Energiegewinnung bislang ungenutzte Flächen vor, deren Erschließung bislang nicht oder zumindest nicht wirtschaftlich möglich ist.

Es ist somit eine Aufgabe der vorliegenden Erfindung, zumindest eines der vorangehend genannten Probleme zu lösen. So kann eine Aufgabe darin gesehen werden, Energiegewinnungsmodule auf bislang nicht oder nicht wirtschaftlich erschließbaren Flächen anordnen zu können. Eine weitere Aufgabe besteht darin, Freiflächen einer Doppelnutzung zuführbar zu machen, sodass neben der bisherigen oder beabsichtigten Flächennutzung zusätzlich Energie aus solarer Strahlung gewonnen werden kann.

Die erfindungsgemäße Aufgabe wird durch eine Vorrichtung zum Tragen von Energiegewinnungsmodulen, insbesondere Solarmodulen, gelöst, wobei die Vorrichtung umfasst:
- eine erste Stützanordnung;
- eine zweite Stützanordnung; und
- eine Tragseilanordnung umfassend zumindest einen ersten Tragseilabschnitt und einen zweiten Tragseilabschnitt, wobei der erste und der zweite Tragseilabschnitt jeweils zwischen der ersten und der zweiten Stützanordnung zumindest abschnittsweise freitragend verlaufen und die erste und die zweite Stützanordnung miteinander verbinden;

wobei die erste und die zweite Stützanordnung dazu eingerichtet sind, die Tragseilanordnung gegenüber einem Untergrund derart zu halten, dass die Tragseilanordnung zumindest im Bereich zwischen der ersten und der zweiten Stützanordnung beabstandet zu dem Untergrund angeordnet ist; und
wobei wenigstens ein Energiegewinnungsmodul an der Tragseilanordnung zwischen der ersten und der zweiten Stützanordnung gehalten ist.

Für Freiflächen-Photovoltaikanlagen eröffnet sich durch die Erfindung unter anderem die Möglichkeit, , die Freifläche auch weiterhin landwirtschaftlich zu nutzen. Gerade das Zusammenspiel aus den Stützanordnungen und der Tragseilanordnung ermöglicht es dabei, die Tragseilanordnung zumindest im Bereich zwischen den Stützanordnungen derart hoch anzuordnen, dass unterhalb der Tragseilanordnung eine ausreichende Durchfahrtshöhe für landwirtschaftliche Maschinen ermöglicht wird. Ferner können die Stützanordnungen in einem solchen Abstand zueinander angeordnet sein, dass eine Bearbeitung der landwirtschaftlichen Fläche durch landwirtschaftliche Maschinen mit üblichen Arbeitsbreiten ermöglicht ist. Die Tragseilanordnung bietet dabei eine besonders einfache und kostengünstige Lösung, um die Energiegewinnungsmodule mit der notwendigen Statik anzuordnen.

Die zumindest abschnittsweise freitragende Anordnung der Tragseilabschnitte ermöglicht es ferner, dass Lasten außerhalb des freitragenden Bereichs aufgenommen werden und auf den Untergrund einwirken. So können Energiegewinnungsmodule auch auf Flächen angeordnet sein, die nicht oder nur teilweise zur Aufnahme von Lasten eingerichtet sind, wie dies bei manchen Dachkonstruktionen der Fall ist. Insgesamt ermöglicht es die Erfindung somit, zusätzliche Flächen für die Energiegewinnung zu erschließen.

Gemäß einer Ausgestaltung der Erfindung kann vorgesehen sein, dass die erste und/oder die zweite Stützanordnung zumindest einen ersten und einen zweiten Stützpfeiler umfasst, wobei der erste Stützpfeiler dazu vorgesehen ist, den ersten Tragseilabschnitt gegenüber dem Untergrund zu halten, und der zweite Stützpfeiler dazu vorgesehen ist, den zweiten Tragseilabschnitt gegenüber dem Untergrund zu halten. Dies betrifft zumindest den jeweiligen Bereich der Tragseilabschnitte zwischen den Stützanordnungen. Die beiden Stützpfeiler können jeweils direkt mit dem Untergrund gekoppelt sein. Die Stützpfeiler ermöglicht es, die jeweiligen Tragseile getrennt voneinander und in einem vorgegebenen Abstand gegenüber dem Untergrund zumindest in dem Bereich, in dem das Tragseil mit dem Stützpfeiler gekoppelt ist, anzuordnen. Die separaten Stützpfeiler können vergleichsweise einfach ausgeführt sein. Ferner kann vorgesehen sein, dass ein jeweiliger Stützpfeiler zumindest überwiegend zur Aufnahme von Kräften entlang einer Längsrichtung des Stützpfeilers ausgebildet ist. Um einen statisch effizienten Kraftfluss bereitzustellen, kann vorgesehen sein, dass die Längsrichtung des Stützpfeilers gemäß einer Hauptlastrichtung, die zumindest aufgrund des zugehörigen Tragseils auf den Stützpfeiler wirkt, ausgerichtet und auf dem Untergrund angeordnet ist.

Gemäß einer Weiterbildung der Erfindung kann vorgesehen sein, dass der erste und der zweite Stützpfeiler in voneinander unterschiedlichen Bereichen mit dem Untergrund gekoppelt sind. So wird vermieden, dass Lasten konzentriert auf den Untergrund einwirken. Somit kann eine verteilte Lasteinleitung in den Untergrund bereitgestellt werden.

Gemäß einer Weiterbildung der Erfindung kann vorgesehen sein, dass der erste und der zweite Stützpfeiler zueinander X-förmig ausgerichtet und/oder einander zumindest abschnittsweise überlagernd angeordnet sind, insbesondere bei Betrachtung in Richtung von der ersten zu der zweiten Stützanordnung. Dies ermöglicht es, Lasten, die zumindest teilweise in Richtung zwischen den Tragseilabschnitten wirken, statisch effizient in die Stützpfeiler einzuleiten. Dies ist beispielsweise auch dann vorteilhaft, wenn die Tragseilabschnitte zumindest auch in Richtung aufeinander verspannt sind. Zusätzlich oder alternativ kann vorgesehen sein, dass der erste und der zweite Stützpfosten zueinander V-förmig ausgerichtet sind. Dies hat den Vorteil, dass am Untergrund lediglich ein gemeinsames Fundament ausreicht. Ferner fällt die Stützanordnung am Untergrund dann besonders schmal aus, was gerade dann vorteilhaft ist, wenn der Untergrund auch anderweitig genutzt werden soll. Alternativ kann vorgesehen sein, dass der erste und der zweite Stützpfeile zueinander im Wesentlichen parallel oder zueinander geringfügig geneigt ausgebildet sind. Ferner kann eine H-Form vorgesehen sein, um die Stützpfosten anzuordnen.

Gemäß einer Ausgestaltung der Erfindung kann eine Kopplungsanordnung vorgesehen sein, die den ersten und den zweiten Stützpfeiler, insbesondere im Bereich der Überlagerung, miteinander koppelt. Damit kann die Stabilität der jeweiligen Stützanordnung zusätzlich verbessert werden und der erste und der zweite Stützpfeiler können sich gegenseitig stützen.

Gemäß einer Weiterbildung der Erfindung kann vorgesehen sein, dass der erste Stützpfeiler zumindest den an dem ersten Stützpfeiler angeordneten Teil des ersten Tragseilabschnitts mit einem ersten Abstand gegenüber dem Untergrund anordnet und der zweite Stützpfeiler zumindest den an dem zweiten Stützpfeiler angeordneten Teil des zweiten Tragseilabschnitts mit einem zweiten Abstand gegenüber dem Untergrund anordnet, wobei die Beträge des ersten und des zweiten Abstands im Wesentlichen gleich oder unterschiedlich ist. Sind die Beträge gleich, kann dies dazu dienen, das zumindest eine Energiegewinnungsmodul zumindest abschnittsweise parallel zu dem Untergrund anzuordnen. Sind die Beträge unterschiedlich, kann dies dazu dienen, das zumindest eine Energiegewinnungsmodul zumindest abschnittsweise in einem Winkel gegenüber dem Untergrund anzuordnen oder Ungleichheiten des Untergrunds auszugleichen. Ein solcher Abstand könnte beispielsweise 7,6 m betragen, sodass trotz Durchhängung der Tragseilabschnitte von beispielsweise 2 m eine Durchfahrtshöhe von 5,6 m nicht unterschritten wird. So können auch große Fahrzeuge unterhalb der Tragseilabschnitte passieren.

Gemäß einem Aspekt der Erfindung kann vorgesehen sein, dass die erste und/oder die zweite Stützanordnung ferner zumindest ein Stützpfeilerstabilisierungselement umfasst, das den ersten und den zweiten Stützpfeiler miteinander koppelt, wobei das Stützpfeilerstabilisierungselement dazu eingerichtet ist, einer relativen Verlagerung zumindest der jeweiligen mit den Tragseilabschnitten gekoppelten Bereiche der Stützpfeiler aufeinander und/oder in Richtung voneinander weg entgegenzuwirken, insbesondere diese zu sperren. So kann die entsprechende Stützanordnung zusätzlich stabilisiert werden, was zu einer verbesserten Anordnung der Tragseilabschnitte und der Energiegewinnungsmodule beiträgt.

Gemäß einer Weiterbildung der Erfindung kann vorgesehen sein, dass zumindest ein an dem Untergrund ausgebildetes Fundament vorgesehen ist und zumindest ein Teil der ersten und/oder zweiten Stützanordnung über das Fundament mit dem Untergrund gekoppelt ist. Im Fall von mehreren Stützträgern kann einigen oder jedem der Stützträger zumindest ein jeweiliges Fundament zuordenbar sein. Ein solches Fundament ermöglicht eine feste Anordnung des Stützträgers am Untergrund und/oder eine flächige Krafteinleitung am Untergrund. Ein vorangehend genanntes Fundament kann ein Betonfundament, ein Schraubfundament, einen Mikropfahl, eine Pfahlgründung beispielsweise nach dem CSV-oder Rüttelstopfverfahren und/oder einen Erdanker oder dergleichen umfassen.

Gemäß einer Weiterbildung der Erfindung kann vorgesehen sein, dass die Tragseilanordnung abseits des Bereichs zwischen der ersten und der zweiten Stützanordnung mit dem Untergrund gekoppelt, insbesondere verspannt, ist. Damit ist die Tragseilanordnung nicht nur mittels der Stützanordnungen mit dem Untergrund gekoppelt. So kann beispielsweise der erste Tragseilabschnitt an zumindest zwei Stellen des Untergrunds mit diesem gekoppelt, insbesondere verspannt sein. Eine erste Stelle kann einer Umgebung der ersten Stützanordnung und eine zweite Stelle kann einer Umgebung der zweiten Stützanordnung zuordenbar sein. Gleiches kann für den zweiten oder weitere Tragseilabschnitte gelten. Die mit dem oder den jeweiligen Tragseilabschnitten gekoppelten Stützanordnungen können an dem Untergrund im Bereich zwischen diesen Stellen angeordnet sein. Es können an dem Untergrund Fundamente vorgesehen sein, wobei vorgesehen sein kann, dass Tragseilabschnitte, beispielsweise die jeweiligen Tragseilabschnitte im Bereich der ersten oder zweiten Stützanordnung, mit einem gemeinsamen Fundament in dem Untergrund oder mit unterschiedlichen Fundamenten in dem Untergrund gekoppelt sind. Man denke im Zusammenhang mit Fundamenten auch an Erdanker. Durch die Kopplung der Tragseilanordnung mit dem Untergrund können die Tragseilabschnitte mit hohen Zugkräften vorgespannt werden. Entsprechend stabil und geometrisch ausgerichtet müssen die Stützanordnungen, insbesondere die Stützpfosten, sein, um die aufgrund der Vorspannung der Tragseilanordnung entstehenden Kräfte aufzunehmen und die Tragseilanordnung im Bereich zwischen den Stützanordnungen gegenüber dem Untergrund beabstandet anzuordnen und zu halten.

Im Falle des ersten Tragseilabschnitts kann dieser in dem Bereich der ersten Stützanordnung mit dem Untergrund beispielsweise über ein Fundament und in dem Bereich der ersten Stützanordnung mit dem Untergrund beispielsweise über ein weiteres Fundament gekoppelt sein, wobei der erste Tragseilabschnitt im Bereich dazwischen von zumindest der ersten und der zweiten Stützanordnung gehalten wird und relativ zu dem Untergrund beabstandet angeordnet ist. Gleiches kann für den zweiten oder einen beliebigen weiteren Tragseilabschnitt gelten.

Gemäß einer Weiterbildung der Erfindung kann vorgesehen sein, dass der erste und der zweite Tragseilabschnitt abseits des Bereichs zwischen der ersten und der zweiten Stützanordnung einander überlagernd, insbesondere bei Betrachtung in Richtung von der ersten zu der zweiten Stützanordnung, angeordnet sind. Somit kann eine besonders effiziente Verspannung der Tragseile erreicht werden. Zudem kann dies dazu beitragen, die Tragseilabschnitte auf engem Raum mit dem Untergrund zu koppeln.

Gemäß einer Weiterbildung der Erfindung kann ferner vorgesehen sein, dass zumindest eine der Seilanordnungen, bevorzugt die Tragseilanordnung, besonders bevorzugt zumindest eines der Tragseile, zumindest eine Federanordnung umfasst. Die Federanordnung kann auf die Vorspannung der Federanordnung abgestimmt sein. Eine solche Federanordnung ermöglicht es, insbesondere bei großen Seillängen thermische Dehnungen oder sonstig verursachte Längenänderungen auszugleichen. Spannungsspitzen können somit vermieden werden. Gleichzeitig kann die notwendige Vorspannung der entsprechenden Seilanordnung aufrechterhalten werden. Zusätzlich oder stattdessen kann auch eine Dämpferanordnung vorgesehen sein, die dazu dient, zumindest eine vorgegebene Frequenz zu dämpfen. Eine solche Frequenz kann beispielsweise eine Eigenfrequenz der Seilanordnung, der gesamten Vorrichtung oder eines Bestandteils der Vorrichtung sein.

Gemäß einer Weiterbildung der Erfindung kann vorgesehen sein, dass zumindest die erste und/oder die zweite Stützanordnung, bevorzugt der erste und/oder zweite Stützpfeiler, gegenüber dem Untergrund bzw. der Lotrichtung geneigt, insbesondere nach außen geneigt, angeordnet ist. Beispielsweise kann dazu eine Neigung im Bereich von 20° bis 45° relativ zu einer Senkrechten auf dem Untergrund oder der Lotrichtung vorgesehen sein. Unter Lotrichtung wird eine Lotrechte verstanden, die örtlich die Richtung der Schwerebeschleunigung bzw. Erdbeschleunigung angibt. So kann vorgesehen sein, dass ein mit den Tragseilen gekoppelter Bereich der Stützanordnung zumindest bei Betrachtung von oben zumindest teilweise versetzt gegenüber einem Bereich angeordnet ist, an dem diese Stützanordnung mit dem Untergrund gekoppelt ist. So kann beispielsweise der mit den Tragseilabschnitten gekoppelte Bereich der ersten Stützanordnung näher (damit nach innen geneigt) oder größer (damit nach außen geneigt) beabstandet gegenüber der zweiten Stützanordnung angeordnet sein als der mit dem Untergrund gekoppelte Bereich der ersten Stützanordnung. Gleiches kann für die zweite Stützanordnung gelten. Ferner können die erste und die zweite Stützanordnung, insbesondere die jeweiligen Tragstützen, gemäß einer imaginären V-Form ausgerichtet sein.

Gemäß einer Weiterbildung der Erfindung kann vorgesehen sein, die erste und/oder die zweite Stützanordnung, bevorzugt der erste und/oder zweite Stützpfeiler, relativ zu einer Seilrichtung der Tragseilanordnung, insbesondere einem der Tragseilabschnitte, geneigt ausgerichtet ist. Unter Seilrichtung wird die Richtung verstanden, entlang der das Seil zumindest lokal ausgerichtet ist. Die Neigung relativ zu der Seilrichtung kann insbesondere für den Teil der Tragseilanordnung zutreffen, der unmittelbar an der entsprechenden Stützanordnung angeordnet ist. Beispielsweise kann hierfür ein Winkel im Bereich von ca. 45° bis 70° vorgesehen sein. Es versteht sich, dass der Winkel in Abhängigkeit von der Vorspannung gewählt sein kann, mit der die Tragseilanordnung bzw. die Tragseilabschnitte zumindest im Bereich zwischen den Stützanordnungen vorgespannt ist.

Gemäß einer Weiterbildung der Erfindung kann vorgesehen sein, dass die Tragseilanordnung einen überspannten Bereich des Untergrunds zwischen der ersten und der zweiten Stützanordnung und bevorzugt zwischen dem ersten und dem zweiten Tragseilabschnitt definiert, wobei die erste und/oder zweite Stützanordnung zumindest teilweise in dem überspannten Bereich und/oder zumindest teilweise außerhalb des überspannten Bereichs mit dem Untergrund gekoppelt ist.

Gemäß einer Weiterbildung der Erfindung kann vorgesehen sein, dass die Tragseilanordnung, insbesondere zumindest der erste und der zweite Tragseilabschnitt, im Bereich zwischen der ersten und der zweiten Stützanordnung und bevorzugt im Bereich zwischen dem ersten und dem zweiten Tragseilabschnitt eine Tragseilfläche aufspannt. Die Tragseilfläche kann zumindest abschnittsweise parallel zu dem Untergrund ausgerichtet sein. Ferner kann die Tragseilfläche gemäß einer U-Form oder W-Form, insbesondere gemäß einer flachen U-Form oder W-Form, ausgebildet sein. Ferner kann die Tragseilfläche eine imaginäre Verbindungslinie umfassen, die senkrecht zu dem ersten und dem zweiten Tragseilabschnitt ausgerichtet ist und diese miteinander verbindet, wobei die Verbindungslinie zumindest abschnittsweise, vorzugsweise im gesamten Bereich, zwischen der ersten und der zweiten Stützanordnung parallel oder in einem Winkel zu dem Untergrund und/oder senkrecht oder in einem Winkel relativ zu der Richtung der Erdbeschleunigung ausgerichtet oder ausrichtbar ist. Die Tragseilfläche und/oder die Verbindungslinie kann ferner gemäß einem vorgegebenen oder vorgebbaren Winkel gegenüber dem Untergrund und/oder relativ zu der Richtung der Erdbeschleunigung ausgerichtet sein. Dies kann beispielsweise durch voneinander unterschiedliche Höhen der Tragseilabschnitte gegenüber dem Untergrund im Bereich zwischen der ersten und der zweiten Stützanordnung realisiert werden. Man denke auch an unterschiedliche Längen der Stützpfosten. Insgesamt kann so erreicht werden, das von der Tragseilanordnung gehaltene Energiegewinnungsmodul bedarfsgemäß beispielsweise gemäß einer Himmelsrichtung auszurichten.

Gemäß einer Weiterbildung der Erfindung kann vorgesehen sein, dass das wenigstens eine Energiegewinnungsmodul zumindest von dem ersten und dem zweiten Tragseilabschnitt gehalten ist.

Gemäß einer Weiterbildung der Erfindung kann vorgesehen sein, dass das wenigstens eine Energiegewinnungsmodul zumindest bei Betrachtung von oben zumindest teilweise, bevorzugt überwiegend, besonders bevorzugt vollständig, im Bereich zwischen dem ersten und/oder zweiten Tragseilabschnitt angeordnet ist. Dies kann für alle oder auch nur für einige der Energiegewinnungsmodule zwischen der ersten und der zweiten Stützanordnung zutreffen.

Gemäß einer Weiterbildung der Erfindung kann vorgesehen sein, dass das wenigstens eine Energiegewinnungsmodul zumindest bei Betrachtung von oben zumindest teilweise, bevorzugt überwiegend, besonders bevorzugt vollständig, außerhalb des Bereichs zwischen dem ersten und/oder dem zweiten Tragseilabschnitt angeordnet ist. Dies kann für alle oder auch nur für einige der Energiegewinnungsmodule zwischen der ersten und der zweiten Stützanordnung zutreffen.

Gemäß einer Weiterbildung der Erfindung kann vorgesehen sein, dass das wenigstens eine Energiegewinnungsmodul auf, insbesondere oberhalb, der Tragseilanordnung angeordnet ist.

Gemäß einer Weiterbildung der Erfindung kann vorgesehen sein, dass das Energiegewinnungsmodul derart zumindest gegenüber einem der Tragseilabschnitte gehalten ist, dass Spiel zwischen dem Energiegewinnungsmodul und dem Tragseilabschnitt zugelassen ist. Dies kann dazu dienen, Spannungsspitzen in dem Energiegewinnungsmodul zu vermeiden. Ferner kann vermieden werden, dass sich aufgrund von Verformung der Tragseilabschnitte entstehende Kräfte auf das Energiegewinnungsmodul übertragen.

Gemäß einer Weiterbildung der Erfindung kann vorgesehen sein, dass das wenigstens eine Energiegewinnungsmodul zumindest mittels einer ersten Lageranordnung und einer zweiten Lageranordnung wenigstens mittelbar an einem der Tragseilabschnitte gehalten ist, wobei zumindest eine der Lageranordnungen Spiel relativ zu dem Tragseilabschnitt in zumindest einer Richtung zulässt. Die erste Lageranordnung kann gemäß einem Festlager und die zweite Lageranordnung kann gemäß einem Loslager ausgebildet sein, wobei das Loslager zumindest eine relative Verlagerbarkeit des Energiegewinnungsmoduls relativ zu dem Tragseilabschnitt, insbesondere in Richtung bzw. entlang des Tragseilabschnitts, bereitstellt. Das Festlager kann eine relative Verlagerbarkeit des Energiegewinnungsmoduls relativ zu dem Tragseilabschnitt, insbesondere in Richtung bzw. entlang des Tragseilabschnitts, verhindern.

Gemäß einer Weiterbildung der Erfindung kann vorgesehen sein, dass das Energiegewinnungsmodul zumindest mittels einer ersten Lageranordnung wenigstens mittelbar mit einem der Tragseilabschnitte gekoppelt ist und ferner zumindest mittels einer zweiten Lageranordnung wenigstens mittelbar mit einem anderen der Tragseilabschnitte, wobei die erste Lageranordnung gemäß einem Festlager und die zweite Lageranordnung gemäß einem Loslager ausgebildet ist. Das Loslager kann zumindest eine relative Verlagerbarkeit des Energiegewinnungsmoduls relativ zu dem Tragseilabschnitt, insbesondere in Richtung bzw. entlang des Tragseilabschnitts, bereitstellen. Das Festlager kann eine relative Verlagerbarkeit des Energiegewinnungsmoduls relativ zu dem Tragseilabschnitt, insbesondere in Richtung bzw. entlang des Tragseilabschnitts, verhindern. In anderen Worten kann vorgesehen sein, dass das wenigstens eine Energiegewinnungsmodul mit einem der Tragseilabschnitte in Richtung quer zu dem Tragseilabschnitt und in Richtung entlang des Tragseilabschnitt fest verbunden ist und mit einem anderen der Tragseilabschnitte in Richtung quer zu dem Tragseilabschnitt fest und in Richtung entlang des Tragseilabschnitts verlagerbar angeordnet ist. Auf diese Weise kann das Energiegewinnungsmodul statisch bestimmt relativ zu der Tragseilanordnung angeordnet sein. Ferner können Spannungen innerhalb des Energiegewinnungsmoduls beispielsweise in der Tragseilrichtung vermieden werden.

Gemäß einer Weiterbildung der Erfindung kann vorgesehen sein, dass eine Mehrzahl an Energiegewinnungsmodulen an der Tragseilanordnung zwischen der ersten und der zweiten Stützanordnung gehalten ist. Bevorzugt sind die Energiegewinnungsmodule dabei derart angeordnet, dass sie einander nicht oder nur geringfügig überlagern, insbesondere bei Betrachtung in Richtung senkrecht auf die Energiegewinnungsmodule. Es kann vorgesehen sein, dass zumindest zwei der Energiegewinnungsmodule nebeneinander in Richtung zumindest von einem der Tragseilabschnitte angeordnet sind. Ferner kann vorgesehen sein, dass zumindest zwei der Energiegewinnungsmodule nebeneinander in Richtung quer zu zumindest einem der Tragseilabschnitte und/oder quer zu der Richtung von einem der Tragseilabschnitte zu einem anderen der Tragseilabschnitte angeordnet sind.

Als Energiegewinnungsmodule können Solarmodulen wie Photovoltaikmodule, Photovoltaik-Röhren, Solarthermie-Kollektoren, Solarthermie-Röhren, Solarthermiemodule usw. gehören. Man denke neben der Energieerzeugung basierend auf elektromagnetischer Strahlung ferner an Energiegewinnungsmodule, die beispielsweise Energie basierend auf Windkraft oder Verdunstung gewinnen können oder auch an Module, die durch Kondensation Energie und/oder Feuchtigkeit, insbesondere (Trink-)Wasser, aus Luft gewinnen können.

Gemäß einer Weiterbildung der Erfindung umfasst die Vorrichtung zum Tragen von Energiegewinnungsmodulen ferner zumindest ein Tragseilstabilisierungselement, das zumindest den ersten und den zweiten Tragseilabschnitt zumindest in einem Bereich zwischen der ersten und der zweiten Stützanordnung miteinander koppelt, wobei das Tragseilstabilisierungselement dazu eingerichtet ist, einer relativen Verlagerung des ersten und zweiten Tragseils im Bereich der Kopplung in Richtung aufeinander zu und/oder in Richtung voneinander weg entgegenzuwirken, bevorzugt zu dämpfen, besonders bevorzugt zu sperren. Das Tragseilstabilisierungselement kann beabstandet zu dem Untergrund angeordnet sein. Ferner kann das Tragseilstabilisierungselement lediglich mit dem ersten und dem zweiten Tragseilabschnitt oder weiteren Tragseilabschnitten gekoppelt sein. Das Tragseilstabilisierungselement kann jeweils genau einen Kopplungsbereich mit jedem der Tragseilabschnitte aufweisen.

Gemäß einer Weiterbildung der Erfindung umfasst die Vorrichtung zum Tragen von Energiegewinnungsmodulen ferner zumindest eine Spannseilanordnung, die zumindest mittelbar mit der Tragseilanordnung zumindest im Bereich zwischen der ersten und zweiten Stützanordnung verbunden ist und die Tragseilanordnung mit dem Untergrund und/oder zumindest einer der Stützanordnungen koppelt, insbesondere verspannt. Durch die Spannseilanordnung entsteht ein vorgespannter, insbesondere dreidimensionaler Seilbinder und es wird eine zusätzliche Stabilisierung der Tragseilanordnung bereitgestellt. Durch die hohe Steifigkeit wird sichergestellt, dass Biegung und Verwindung in den Energiegewinnungsmodulen, insbesondere bei solchen auf Basis von bruchempfindlichem Glas, ein vom jeweiligen Hersteller vorgegebenes Maß nicht überschreiten und die jeweilige Herstellergarantie nicht beeinflusst wird. Es kann vorgesehen sein, dass die Spannung der Spannseilanordnung einstellbar ist. Dazu kann vorgesehen sein, dass die Spannseilanordnung zumindest einen Seilspanner umfasst. Die Spannseilanordnung kann dazu vorgesehen sein, die Tragseilanordnung zumindest anteilig in Richtung des Untergrunds zu verspannen. Die Spannseilanordnung kann dazu vorgesehen sein, auf die Tragseilanordnung, insbesondere einen der Tragseilabschnitte, eine Kraft aufzubringen, die eine Kraftkomponente aufweist, welche senkrecht zu dem Tragseilabschnitt wirkt. Insgesamt trägt die Spannseilanordnung gerade im Hinblick auf dynamische Lasten wie Windlasten dazu bei, die Tragseilanordnung zu stabilisieren. Es kann vorgesehen sein, dass die Spannseilanordnung, insbesondere zumindest eines der Spannseile der Spannseilanordnung, zumindest eine Federanordnung umfasst. Die Federanordnung kann auf die Vorspannung abgestimmt sein. Die zumindest eine Federanordnungen dient dazu, um insbesondere bei großen Seillängen thermische Dehnungen oder sonstig verursachte Längenänderungen und damit einhergehende Änderungen der Vorspannung auszugleichen.

Gemäß einer Weiterbildung der Erfindung kann vorgesehen sein, dass die Spannseilanordnung zumindest über einen Krafteinleitungsbereich, bevorzugt über zumindest zwei Krafteinleitungsbereiche, mit dem ersten oder zweiten Tragseilabschnitt gekoppelt ist. Dabei kann vorgesehen sein, dass die Spannseilanordnung zumindest über den einen Krafteinleitungsbereich gemäß einem Festlager mit dem ersten oder zweiten Tragseil gekoppelt ist. Nachteilig ist zwar, dass dadurch links und rechts des Festlagers unterschiedliche Seilkräfte in Spann- und Tragseilanordnung entstehen können. Vorteilhaft ist dabei jedoch die Sicherungsfunktion, weil im Fall des Reißens eines Tragseils bzw. Tragseilabschnitts die Koppelung des Spannseils bzw. der Spannseilanordnung über einen Festpunkt ein Umfallen der Konstruktion verhindert. Der zweite Krafteinleitungsbereich ist mittels einem Loslager mit dem ersten oder zweiten Tragseil gekoppelt.

Gemäß einer Weiterbildung der Erfindung kann vorgesehen sein, dass die Spannseilanordnung mit dem ersten Tragseilabschnitt und dem zweiten Stützpfeiler und/oder mit dem zweiten Tragseilabschnitt und dem ersten Stützpfeiler verbunden ist und diese miteinander verspannt. So kann eine besonders günstige Verspannung der Tragseilanordnung bereitgestellt werden.

Gemäß einer Weiterbildung der Erfindung kann vorgesehen sein, dass die Spannseilanordnung im Wesentlichen unterhalb der Tragseilfläche angeordnet ist. Dies ermöglicht eine besonders kompakte Ausgestaltung.

Gemäß einer Weiterbildung der Erfindung kann vorgesehen sein, dass die Tragseilanordnung, insbesondere zumindest einer der Tragseilabschnitte zumindest abschnittsweise und/oder zumindest näherungsweise einer gemeinsamen Ebene zuordenbar sind, insbesondere in dieser Ebene angeordnet sind. Optional kann vorgesehen sein, dass die Spannseilanordnung nicht dieser Ebene zuordenbar ist, insbesondere nicht vollständig innerhalb dieser Ebene ausgebildet ist. Anders ausgedrückt kann die Spannseilanordnung dazu eingerichtet sein, auf die Tragseilanordnung, insbesondere zumindest einen der Tragseilabschnitte, eine Kraft aufzubringen, die in einem Winkel zu der Ebene ausgerichtet ist. Insgesamt bewirken die vorangehend beschriebenen Ausführungen eine besonders gute Stabilisierung der Tragseilanordnung.

Gemäß einer Weiterbildung der Erfindung umfasst die Vorrichtung zum Tragen von Energiegewinnungsmodulen ferner zumindest eine Hilfsspannseilanordnung, die die Spannseilanordnung mit der Tragseilanordnung zumindest zusätzlich koppelt. Dabei kann vorgesehen sein, dass die Hilfsspannseilanordnung und das Stabilisierungselement in einem gemeinsamen Bereich mit dem ersten oder zweiten Tragseilabschnitt gekoppelt sind. Es kann vorgesehen sein, dass die Hilfsspannseilanordnung und die Spannseilanordnung derart miteinander gekoppelt sind, dass eine relative Verlagerung von Hilfsspannseilanordnung und Spannseilanordnung bereitgestellt ist. So können die Spannseilanordnung und die Hilfsspannseilanordnung gemäß einem Loslager miteinander gekoppelt sein.

Gemäß einer Weiterbildung der Erfindung umfasst die Vorrichtung zum Tragen von Energiegewinnungsmodulen ferner zumindest eine Hilfsstützanordnung, die dazu eingerichtet ist, die Tragseilanordnung in einem Bereich zwischen der ersten und der zweiten Stützanordnung gegenüber dem Untergrund zu halten und gegenüber diesem zu beabstanden. Die Hilfsstützanordnung kann überwiegend zur Einleitung und/oder Aufnahme von Querkräften der Tragseilanordnung, insbesondere lediglich zur Einleitung und/oder Aufnahme von Querkräften an der Tragseilanordnung, vorgesehen sein. Die Hilfsstützanordnung kann anders als die erste und/oder die zweite Stützanordnung gegenüber dem Untergrund bzw. der Lotrichtung nicht geneigt angeordnet sein. So kann die Hilfsstützanordnung zumindest bei Betrachtung in Richtung quer zu dem ersten und/oder zweiten Tragseilabschnitt im Wesentlichen senkrecht, insbesondere im Wesentlichen senkrecht gegenüber dem Untergrund, ausgerichtet sein.

Gemäß einer Weiterbildung der Erfindung umfasst die Vorrichtung zum Tragen von Energiegewinnungsmodulen ferner zumindest eine Trägerkonstruktion, die mit der Tragseilanordnung im Bereich zwischen der ersten und der zweiten Stützanordnung gekoppelt und dazu eingerichtet ist, zumindest ein Energiegewinnungsmodul zu lagern. Dabei kann vorgesehen sein, dass die Trägerkonstruktion zumindest in Richtung quer zu dem ersten und/oder zweiten Tragseilabschnitt im Wesentlichen steif ausgebildet ist. Ferner kann die Trägerkonstruktion zumindest eine erste und eine zweite Tragschiene aufweisen, die bevorzugt im Wesentlichen parallel zueinander ausgerichtet sind. Es kann vorgesehen sein, dass die Trägerkonstruktion überwiegend im Bereich zwischen dem ersten und dem zweiten Tragseilabschnitt ausgebildet ist und/oder den ersten und den zweiten Tragseilabschnitt in Richtung quer zu den Tragseilabschnitten überragt. Die Trägerkonstruktion kann mittels der vorangehend beschriebenen Lageranordnungen mit der Tragseilanordnung gekoppelt sein. Ferner kann die Trägerkonstruktion auf eine Weise mit der Tragseilanordnung gekoppelt bzw. an dieser gelagert und gehalten sein, wie dies vorangehend im Zusammenhang mit den Energiegewinnungsmodulen beschrieben ist. Vorzugsweise sind auf der Trägerkonstruktion mehrere Energiegewinnungsmodule angeordnet.

Gemäß einer Weiterbildung der Erfindung kann vorgesehen sein, dass die Tragseilanordnung ferner einen dritten Tragseilabschnitt umfasst, welcher zwischen der ersten und der zweiten Stützanordnung zumindest abschnittsweise freitragend verläuft, die erste und die zweite Stützanordnung miteinander verbindet und bevorzugt im Bereich zwischen dem ersten und dem zweiten Tragseilabschnitt angeordnet ist. Der dritte Tragseilabschnitt kann relativ zu dem Untergrund zumindest abschnittsweise mehr oder weniger beabstandet sein als der erste und/oder der zweite Tragseilabschnitt. Es kann vorgesehen sein, dass der erste und der dritte Tragseilabschnitt zum Tragen von Energiegewinnungsmodulen in einer ersten Ausrichtung und der zweite und der dritte Tragseilabschnitt zum Tragen von Energiegewinnungsmodulen gemäß einer zweiten Ausrichtung vorgesehen sind, wobei die erste und die zweite Ausrichtung voneinander unterschiedlich sind. Entsprechend kann ein erstes Energiegewinnungsmodul, das von dem ersten und dem dritten Tragseilabschnitt in der ersten Ausrichtung gehalten wird, und ein zweites Energiegewinnungsmodul vorgesehen sein, das von dem zweiten und dem dritten Tragseilabschnitt in der zweiten Ausrichtung gehalten wird. Der dritte Tragseilabschnitt kann dazu dienen, eine erste Tragseilfläche mit dem ersten Tragseilabschnitt und eine zweite Tragseilfläche mit dem zweiten Tragseilabschnitt zu bilden, wobei die Tragseilabschnitte zusammen eine Form gemäß oder ähnlich einem Satteldach zu bilden.

Gemäß einer Weiterbildung der Erfindung kann vorgesehen sein, dass zumindest die erste und/oder die zweite Stützanordnung einen dritten Stützpfosten umfasst, der den dritten Tragseilabschnitt trägt. Der der dritte Stützposten kann zumindest mittelbar, beispielsweise mittels des ersten oder zweiten Stützpfostens, oder direkt mit dem Untergrund gekoppelt sein.

Gemäß einer Weiterbildung kann vorgesehen sein, dass an dem ersten und dem dritten Tragseilabschnitt zumindest eines der Energiegewinnungsmodule in einer ersten Ausrichtung angeordnet ist und an dem zweiten und an dem dritten Tragseilabschnitt zumindest ein weiteres der Energiegewinnungsmodule gemäß einer zweiten Ausrichtung angeordnet ist, wobei die erste und die zweite Ausrichtung voneinander unterschiedlich sind. So kann ein Teil der Energiegewinnungsmodule beispielsweise eine überwiegende Ostausrichtung und ein anderer Teil der Energiegewinnungsmodule eine überwiegende Westausrichtung aufweisen, wobei natürlich auch andere Ausrichtungen nach Himmelsrichtung und/oder gegenüber der Atmosphäre vorgesehen sein können.

Gemäß einer Weiterbildung kann vorgesehen sein, dass die erste und die zweite Ausrichtung derart vorgesehen sind, dass die Energiegewinnungsmodule gemäß einer V-Form oder Satteldachform angeordnet sind. Beide Anordnungen ermöglichen es, Energiegewinnungsmodule beispielsweise gemäß einer Ost-West-Ausrichtung anzuordnen. Im Hinblick auf Niederschlag ermöglicht eine V-Form, Wasser mittig zu sammeln und beispielsweise einer gemeinsamen Regenrinne zuzuführen. Die Satteldachform ist hingegen hinsichtlich einer Vermeidung von Verschattung der Energiegewinnungsmodule besonders vorteilhaft.

Gemäß einer Weiterbildung der Erfindung umfasst die Vorrichtung zum Tragen von Energiegewinnungsmodulen zumindest eine Verlagerungsanordnung, die dazu eingerichtet ist, zumindest die Ausrichtung der Tragseilanordnung relativ zu dem Untergrund zumindest innerhalb eines vorgegebenen Winkelbereichs, insbesondere zumindest um eine Achse, zu ändern. Dies kann es ermöglichen, das wenigstens eine Energiegewinnungsmodul und/oder die Tragseilfläche gemäß einem Sonnenstand auszurichten oder einem Sonnenstand insbesondere einachsig nachzuführen. Es kann vorgesehen sein, dass die Verlagerungsanordnung an zumindest einer, bevorzugt jeweils eine Verlagerungsanordnung an jeder der Stützanordnungen, ausgebildet ist. So kann die Verlagerungsanordnung dazu eingerichtet sein, die Tragseilanordnung zumindest um einen Drehpunkt bzw. eine Drehachse relativ zu der Stützanordnung zu verlagern. Es kann vorgesehen sein, dass die Verlagerungsanordnung dazu eingerichtet ist, zumindest eine Ausrichtung einer Verbindungsgeraden, die senkrecht zu dem ersten und dem zweiten Tragseilabschnitt ausgerichtet ist und diese miteinander verbindet, zu ändern. Ferner kann die Verlagerungsanordnung dazu eingerichtet sein, die winkelmäßige Ausrichtung der Tragseilfläche relativ zu dem Untergrund zu ändern. Die Verlagerungsanordnung kann betätigbar und/oder steuerbar, insbesondere abhängig vom Sonnenstand betätigbar und/oder steuerbar, sein.

Gemäß einer Weiterbildung der Erfindung kann vorgesehen sein, dass die Vorrichtung zum Tragen von Energiegewinnungsmodulen zumindest teilweise symmetrisch bezüglich einer Symmetrieebene ausgebildet ist. Dabei kann die Symmetrieebene zwischen der ersten und der zweiten Stützanordnung angeordnet sein.

Gemäß einer Weiterbildung der Erfindung kann vorgesehen sein, dass zumindest der erste und der zweite Tragseilabschnitt jeweils von zumindest einem Tragseil gebildet sind, wobei die jeweiligen Tragseile voneinander unterschiedlich sind.

Gemäß einer Weiterbildung der Erfindung kann vorgesehen sein, dass die Tragseilanordnung und/oder die Spannseilanordnung vollständig oder zumindest abschnittsweise im Bereich zwischen der ersten und der zweiten Stützanordnung oberhalb eines Mindestabstands zu dem Untergrund angeordnet ist. Bevorzugt beträgt der Mindestabstand beispielsweise wenigstens 2,10 m, 4 m, 5,6 m oder gar wenigstens 6m. Eine Durchfahrtshöhe von zumindest 5,6 m ermöglicht es beispielsweise, dass auch große landwirtschaftliche Maschinen unter der Tragseilanordnung bzw. Spannseilanordnung fahren können.

Gemäß einer Weiterbildung der Erfindung umfasst zumindest einer der Tragseilabschnitte ein Stahlseil.

Gemäß einer Weiterbildung der Erfindung umfasst zumindest eine der Stützanordnungen, insbesondere zumindest einer der Stützpfosten, metallisches Material, insbesondere Stahl, Aluminium, Kupfer, Gusseisen, Beton, insbesondere Schleuderbeton, Stahlbeton, Naturstein, Holz, Kunststoff und/oder einen Verbundwerkstoff.

Die erfindungsgemäße Aufgabe wird ferner durch eine Anordnung zum Tragen von Energiegewinnungsmodulen gelöst, umfassend zumindest eine erste und eine zweite Vorrichtung zum Tragen von Energiegewinnungsmodulen gemäß einem der vorangehenden Ausführungsformen. Die beiden Vorrichtung zum Tragen von Energiegewinnungsmodulen können nebeneinander, insbesondere in Richtung quer zu einem der Tragseilabschnitt, angeordnet sein. Dabei können die ersten Stützanordnungen gemäß einer ersten imaginären Ebene ausgerichtet und die zweiten Stützanordnungen gemäß einer zweiten imaginären Ebene ausgerichtet sein, insbesondere im Wesentlichen in der jeweiligen Ebene liegend angeordnet sein. Beispielsweise kann der jeweilige Abstand zwischen der jeweiligen ersten und zweiten Stützanordnung gleich sein. Ferner können zumindest einige der Tragseilabschnitte im Wesentlichen im gleichen Abstand gegenüber dem Untergrund angeordnet sein. Ferner können die Stützanordnungen den jeweiligen Tragseilabschnitt im Wesentlichen im gleichen Abstand gegenüber dem Untergrund anordnen.

Gemäß einer Weiterbildung der Erfindung kann vorgesehen sein, dass die Spannseilanordnung der ersten Vorrichtung mit einer der Stützanordnungen der zweiten Vorrichtung gekoppelt ist.

Gemäß einer Weiterbildung der Erfindung kann vorgesehen sein, dass zumindest einige der Tragseilabschnitte derart mit dem Untergrund gekoppelt sind, dass zumindest einige der Tragseilabschnitte im Bereich zwischen dem Untergrund und der ersten und/oder zweiten Stützanordnung gemäß einer ersten Ebene ausgerichtet sind, insbesondere in dieser Ebene liegend angeordnet sind (und eine sogenannte zusätzliche "Flanke" beispielsweise zur Anbringung von Energiegewinnungsmodulen bilden). Dies ermöglicht es, zusätzliche Energiegewinnungsmodule abseits des Bereichs zwischen der ersten und der zweiten Stützanordnung anzuordnen.

Die Anordnung kann eine Vielzahl an Vorrichtungen umfassen, die in einer gemeinsamen Reihe zueinander angeordnet sind.

Gemäß einer Weiterbildung der Anordnung kann vorgesehen sein, dass zumindest die erste und die zweite Vorrichtung zumindest hinsichtlich
- Abstand zwischen der jeweiligen ersten und zweiten Stützanordnung; und/oder
- Abstand zwischen des jeweiligen ersten und zweiten Tragseilabschnitts; und/oder
- Neigung der jeweiligen ersten Stützanordnung relativ zu dem Untergrund und/oder relativ zu der Lotrichtung; und/oder
- Neigung der jeweiligen zweiten Stützanordnung relativ zu dem Untergrund und/oder relativ zu der Lotrichtung; und/oder
- Neigung der jeweiligen Hilfsstützanordnung relativ zu dem Untergrund und/oder relativ zu der Lotrichtung;

im Wesentlichen gleich ausgebildet ist.

Die Erfindung wird nachfolgend anhand der beigefügten Zeichnungen weiter erläutert. Es stellen dar:
- Fig. 1: eine schematische Darstellung der erfindungsgemäßen Vorrichtung zum Tragen von Energiegewinnungsmodulen;
- Fig. 2: eine schematische Darstellung der erfindungsgemäßen Vorrichtung mit Energiegewinnungsmodulen;
- Fig. 3: eine schematische Darstellung einer Ausführungsform der erfindungsgemäßen Vorrichtung;
- Fig. 4a: eine schematische Detaildarstellung einer erfindungsgemäßen Vorrichtung mit beispielhaften Trägerkonstruktionen;
- Fig. 4b: eine schematische Draufsicht auf eine erfindungsgemäße Vorrichtung mit einer weiteren beispielhaften Trägerkonstruktion;
- Fig. 4c: eine schematische Draufsicht auf eine erfindungsgemäße Vorrichtung mit einer weiteren beispielhaften Trägerkonstruktion;
- Fig. 5: eine schematische Darstellung einer Ausführungsform der erfindungsgemäßen Vorrichtung;
- Fig. 6a: eine schematische Darstellung einer Anordnung zum Tragen von Energiegewinnungsmodulen;
- Fig. 6b: eine schematische Detaildarstellung einer Ausführungsform der Anordnung;
- Fig. 7: eine schematische Detaildarstellung einer Ausführungsform einer Anordnung zum Tragen von Energiegewinnungsmodulen;
- Fig. 8a: eine schematische Detaildarstellung einer Ausführungsform der erfindungsgemäßen Vorrichtung;
- Fig. 8b: eine schematische Detaildarstellung einer Ausführungsform der erfindungsgemäßen Vorrichtung mit einem dritten Tragseilabschnitt;
- Fig. 8c: eine schematische Darstellung einer Ausführungsform in Anlehnung an Figur 8b;
- Fig. 9: eine schematische Darstellung einer Ausführungsform der erfindungsgemäßen Vorrichtung;
- Fig. 10a: eine schematische Darstellung betreffend die Ausführungsform gemäß Figur 9;
- Fig. 10b: eine schematische weitere Darstellung betreffend die Ausführungsform gemäß Figuren 9 und 10a;
- Fig. 10c: eine schematische Draufsicht der in Figur 10b dargestellten Ausführungsform; und
- Fig. 11: eine schematische Darstellung einer beispielhaften Anordnung von Energiegewinnungsmodulen;

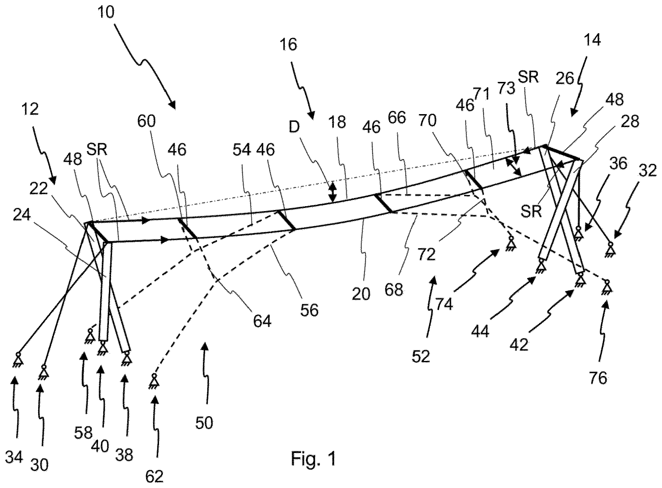

Figur 1 betrifft eine schematische Darstellung der erfindungsgemäßen Vorrichtung 10 zum Tragen von Energiegewinnungsmodulen. Die Vorrichtung 10 umfasst eine erste Stützanordnung 12, eine zweite Stützanordnung 14 und eine Tragseilanordnung 16. Die Tragseilanordnung umfasst einen ersten Tragseilabschnitt 18 und einen zweiten Tragseilabschnitt 20. Die Tragseilabschnitte 18,20 verlaufen zwischen der ersten und der zweiten Stützanordnung 12, 14 im Wesentlichen freitragend und verbinden die erste und die zweite Stützanordnung 12, 14. Die erste Stützanordnung 12 umfasst einen ersten Stützpfeiler 22 und einen zweiten Stützpfeiler 24, die relativ zueinander X-förmig ausgerichtet sind bei Betrachtung in Richtung von der ersten Stützanordnung 12 zu der zweiten Stützanordnung 14. Die zweite Stützanordnung 14 umfasst ebenfalls einen ersten Stützpfeiler 26 und einen zweiten Stützpfeiler 28, die relativ zueinander X-förmig ausgerichtet sind bei Betrachtung in Richtung von der zweiten Stützanordnung 14 zu der ersten Stützanordnung 12.

Jeder der Tragseilabschnitte 18, 20 ist vorliegend als jeweiliges separates Tragseil ausgebildet, wobei beispielsweise auch jeder der Tragseilabschnitte 18, 20 mehrere Seilabschnitte umfassen könnte oder die Tragseilabschnitte 18, 20 durch ein gemeinsames Tragseil gebildet sein könnte. Der erste Tragseilabschnitt 18 ist im Bereich der ersten Stützanordnung 12 mit einem Fundament 30 gekoppelt, welches darauf ausgelegt ist, den Tragseilabschnitt 18 mit dem Untergrund zur Aufnahme von hohen Zugkräften zu verbinden. Der erste Tragseilabschnitt 18 verläuft von dem Fundament 30 über ein dem Untergrund abgewandtes Ende des ersten Stützpfeiler 22 zu einem ebenfalls dem Untergrund abgewandtes Ende des ersten Stützpfeiler 26 und ist in dem Bereich der zweiten Stützanordnung wiederum mit einem Fundament 32 mit dem Untergrund gekoppelt. Auch das Fundament 32 ist zur Aufnahme von hohen Zugkräften ausgelegt. Analog zu dem ersten Tragseilabschnitt 18 verläuft auch der zweite Tragseilabschnitt 20 von einem Fundament 34 im Bereich der ersten Stützanordnung 12 über ein dem Untergrund abgewandtes Ende des zweiten Stützpfeilers 24 zu dem zweiten Stützpfeiler 28 und verläuft dort ebenfalls über eine dem Untergrund abgewandtes Ende des Stützpfeilers 28 und mittels eines Fundaments 36 mit dem Untergrund gekoppelt. Die beiden Tragseilabschnitte 18, 20 verlaufen zwischen der ersten Stützanordnung 12 und der zweiten Stützanordnung 14 im Wesentlichen parallel zueinander und verlaufen jedenfalls einander nicht überlagernd. Die beiden Fundamente 30, 34 sind an dem Untergrund allerdings so angeordnet, dass die Tragseilabschnitte 18, 20 im Bereich zwischen den Fundamenten 30, 34 und der ersten Stützanordnung 12 X-förmig zumindest bei Betrachtung in Richtung von der ersten Stützanordnung 12 zu der zweiten Stützanordnung 14 angeordnet sind und sich überlagern. Entsprechend sind auch die Fundamente 32, 36 an dem Untergrund so angeordnet, dass die Tragseilabschnitte 18, 20 im Bereich zwischen den Fundamenten 32, 36 und der zweiten Stützanordnung 14 X-förmig zumindest bei Betrachtung in Richtung von der zweiten Stützanordnung 14 zu der ersten Stützanordnung zwölf angeordnet sind und sich überlagern. Dies dient dazu, aufgrund der X-förmigen Anordnung der Stützpfosten 22, 24 der ersten Stützanordnung 12 und der Stützpfosten 26, 28 der zweiten Stützanordnung 14 auftretende Kräfte aufzunehmen und so die Vorrichtung 10 fest mit dem Untergrund zu verspannen.

Die Tragseilabschnitte 18, 20 müsse nicht zwangsläufig mit einem dem Untergrund abgewandten Ende der Stützpfosten 22, 24, 26, 28 verlaufen, sondern können auch mit einem anderen Bereich derselben gekoppelt sein und beispielsweise über eine entsprechend daran ausgebildete Umlenkanordnung wie z.B. eine Umlenkrolle umlaufen. Die Stützpfosten 22, 24, 26, 28 weisen vorliegend im Wesentlichen eine gleiche Länge auf, wobei die Länge auch beliebig gewählt sein kann, um die Tragseilabschnitte 18, 20 in gleichen oder unterschiedlichen Höhen gegenüber dem Untergrund anzuordnen. Die Stützpfosten 22, 24, 26, 28 sind über jeweilige Fundamente 38, 40, 42, 44 mit dem Untergrund verbunden, wobei die Stützpfosten 22, 24, 26, 28 auch direkt mit dem Untergrund gekoppelt sein könnten. Vorzugsweise sind die Fundamente 38, 40, 42, 44 jedoch dazu ausgelegt, hohe Druckkräfte aufzunehmen. So können die Fundamente 38, 40, 42, 44 dazu eingerichtet sein, die Druckkräfte flächig in den Untergrund einzuleiten. Beispielsweise können die Fundamente 38, 40, 42, 44 Betonfundamente, Pfählungen, Mikropfähle, Schraubfundamente und/oder Stahlplatten usw. umfassen. Die Stützpfosten 22, 24, 26, 28 können beispielsweise metallisches Material, insbesondere Stahl, Aluminium, Kupfer, Gusseisen, Beton, insbesondere Schleuderbeton, Stahlbeton, Naturstein, Holz, Kunststoff und/oder einen Verbundwerkstoff umfassen. Im Fall von Holz können die Stützpfosten 22, 24, 26, 28 Baumstämme umfassen, die beispielsweise kesselimprägniert oder geflammt sein können, um eine höhere Witterungsbeständigkeit aufzuweisen.

Damit die Tragseilabschnitte 18, 20 zumindest zwischen der ersten und der zweiten Stützanordnung 12, 14 möglichst stabil und zur Aufnahme von hohen statischen und dynamischen Lasten angeordnet sind, sind die Tragseilabschnitte 18, 20 mit hohen Zugkräften vorgespannt. Dazu kann an jedem der Tragseilabschnitte 18, 20 zumindest eine Spannvorrichtung vorgesehen sein, um die Tragseilabschnitte 18, 20 zu spannen. Als solche Spannvorrichtungen kommen beispielsweise Spannschrauben, Gewindespanner, hydraulische Spanner oder dergleichen vorgesehen sein.

Es kann vorgesehen sein, dass die Tragseilanordnung 16, beispielsweise zumindest einer der Tragseilabschnitte 18, 20, eine Federanordnung umfasst. Die Federanordnung kann auf die Vorspannung des jeweiligen Tragseilabschnitts abgestimmt sein. So können gerade bei großen Seillängen thermische Dehnungen oder sonstig verursachte Längenänderungen ausgeglichen werden.

Um die Zugkräfte bzw. die Vorspannung der Tragseilabschnitte 18, 20 verbessert aufzunehmen, sind die Stützpfeiler 22, 24, 26, 28 neben der X-förmigen Ausrichtung zusätzlich relativ zu dem Untergrund bzw. der Lotrichtung geneigt, insbesondere nach außen geneigt, angeordnet. So ist der Abstand zwischen den beiden Stützanordnungen 12, 14 im Bereich des Untergrunds kleiner als in dem dem Untergrund abgewandten Bereich der Stützanordnungen 12, 14. Anders ausgedrückt ist der Abstand der Stützpfosten 22, 24, 26, 28 an deren dem Untergrund abgewandten Ende größer als an deren dem Untergrund zugewandten Ende. Vorteilhafterweise sind die 22, 24, 26, 28 so ausgerichtet, dass sie im Wesentlichen lediglich axiale Kräfte, also entlang einer Längsachse der Stützpfosten 22, 24, 26, 28 verlaufende Kräfte, insbesondere Druckkräfte, zwischen dem Untergrund und den Tragseilabschnitten 18, 20 übertragen. Vorliegend sind die Stützpfeiler 22, 24, 26, 28 in einem Winkel von etwa 45 Grad gegenüber dem Untergrund geneigt ausgerichtet, wobei auch andere Winkel vorgesehen sein können. So kann ein Winkel im Bereich von beispielsweise 10° bis 45° relativ zu der Lotrichtung vorgesehen sein.

Um die Tragseilabschnitte 18, 20 im Bereich zwischen der ersten Stützanordnung 12 und der zweiten Stützanordnung 14 zu stabilisieren und in einem vorgegebenen Abstand zueinander anzuordnen, sind Tragseilstabilisierungselemente 46 im Bereich zwischen den Tragseilabschnitt 18, 20 vorgesehen. Diese Tragseilstabilisierungselemente 46 wirken einer relativen Verlagerung des ersten und zweiten Tragseilabschnitt 18, 20 in Richtung aufeinander und in Richtung voneinander weg entgegen. Dazu können die Tragseilstabilisierungselemente 46 im Wesentlichen starr ausgebildet sein und zusätzlich oder alternativ Dämpferelemente aufweisen. Als Beispiel für Tragseilstabilisierungselemente 46 seien Metallstangen, beispielsweise Stahlstangen oder Aluminiumstangen genannt. Es kann beispielsweise ein Energiegewinnungsmodul, beispielsweise der Rahmen eines Photovoltaikmoduls, als Tragseilstabilisierungselement dienen und dessen Funktion zumindest teilweise übernehmen. Die Tragseilstabilisierungselemente 46 sind vorliegend im Wesentlichen im gleichen Abstand zueinander an dem Tragseilabschnitt 18, 20 angeordnet, wobei der Abstand auch variierend kann.

Um die Stützpfeiler 22, 24 der ersten Stützanordnung 12 zusätzlich zu stabilisieren, können Stützpfeilerstabilisierungselemente 48 vorgesehen sein, die ähnlich wie die Tragseilstabilisierungselemente 46 oder auch wie die Stützpfosten 22, 24 ausgebildet sein können. Vorliegend ist an dem dem Untergrund abgewandten Ende der Stützpfeiler 22, 24 und der Stützpfeiler 26, 28 jeweils ein solches Stützpfeilerstabilisierungselement 48 angeordnet, wobei ein solches Stützpfeilerstabilisierungselement 48 auch mit einem anderen Bereich der Stützpfeiler 22, 24, 26, 28 gekoppelt sein könnte oder mehrere Stützpfeilerstabilisierungselemente bei einer jeweiligen Stabilisierungsanordnung 12, 14 vorgesehen sein können.

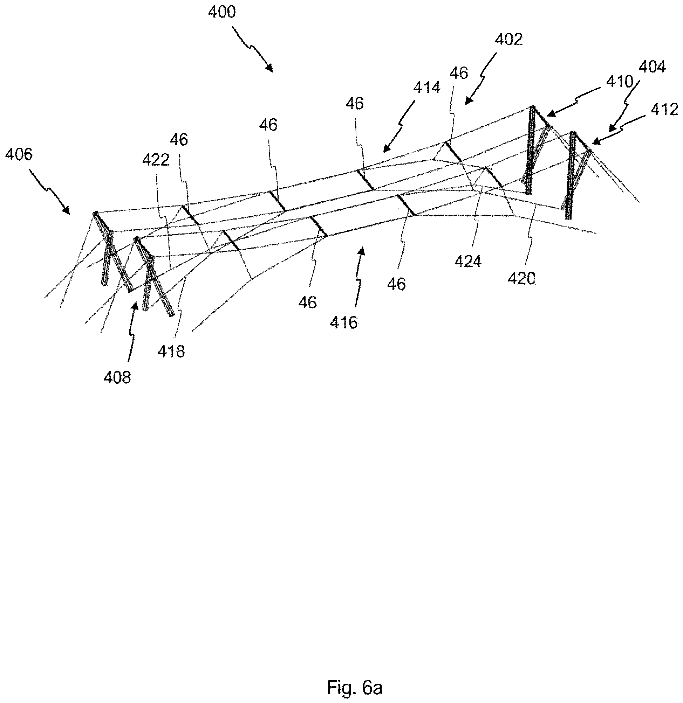

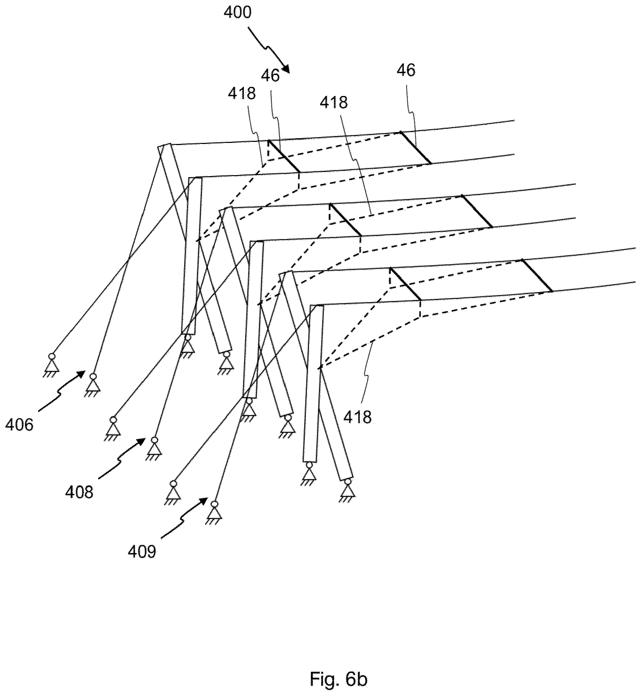

Die Vorrichtung 10 umfasst ferner eine erste Spannseilanordnung 50 und eine zweite Spannseilanordnung 52, die dazu dienen, die Tragseilabschnitte 18, 20 im Bereich zwischen den Stützanordnungen 12, 14 zusätzlich zu stabilisieren. Die Spannseilanordnung 50 kann wesentlich dazu beitragen, ein dreidimensionales, hoch vorgespanntes und im Wesentlichen steifes Gebilde zum Tragen der Energiegewinnungsmodule bereitzustellen. Die Spannseilanordnung 50 kann beispielsweise dazu beitragen, auftretende dynamische Lasten wie Windlasten aufzunehmen. Die erste Spannseilanordnung 50 umfasst einen ersten Spannseilabschnitt 54, der mit dem ersten Tragseilabschnitt 18 und ferner mit einem am Untergrund ausgebildeten Fundament 58 gekoppelt ist. Anstelle der Koppelung der Spannseilabschnitte 54, 56, 66, 68 an jeweils eigenen Fundamenten 58, 62, 74, 76 können diese auch an den Fundamenten 38, 40, 42, 44 der Stützpfosten 22, 24, 26, 28 angebracht sein. Im Falle mehrerer, hintereinander oder nebeneinander angeordneter Vorrichtungen 10 kann die Koppelung anstelle eines separaten Fundamentes 58, 62, 74, 76 an einem benachbarten Stützpfostenfundament 38, 40, also der dahinter liegenden und/oder der davor liegenden Vorrichtung, erfolgen (vgl. Figur 6a). Alternativ dazu und zur Einhaltung durchgehend ausreichender Durchfahrthöhen über einen Teil oder gar die gesamte Durchfahrtbreite, kann die Koppelung auch an den Stützpfeilern 22, 24, 26, 28 der gleichen Vorrichtung 10 (siehe Figur 6b) und/oder einer oder mehrere benachbarten Vorrichtungen erfolgen - vorzugsweise, aber nicht zwingend - im Bereich der Überlagerung der Stützpfeiler 22, 24 (siehe Figur 6b) oder an einem anderen Bereich der Stützpfeiler 22, 24.

Ferner ist eine erste Hilfsspannseilanordnung 60 vorgesehen, die mit dem ersten Spannseilabschnitt 54 im Bereich zwischen dem Fundament 58 und der Kopplung mit dem ersten Tragseilabschnitt 18 gekoppelt ist und den ersten Tragseilabschnitt 18 zusätzlich mit dem Spannseilabschnitt 54 und damit mit dem Untergrund verspannt. Vorzugsweise ist die Hilfsspannseilanordnung 60 und der erste Spannseilabschnitt 54 gemäß einem Loslager miteinander gekoppelt, um eine relative Verlagerung von Hilfsspannseilanordnung 60 und dem ersten Spannseilabschnitt 54 zu ermöglichen. Die erste Spannseilanordnung 50 umfasst ferner einen zweiten Spannseilabschnitt 56, der mit dem zweiten Tragseilabschnitt 18 und ferner mit einem weiteren am Untergrund ausgebildeten Fundament 62 gekoppelt ist. Ferner ist eine zweite Hilfsspannseilanordnung 64 vorgesehen, die mit dem zweiten Spannseilabschnitt 56 im Bereich zwischen dem Fundament 62 und der Kopplung mit dem zweiten Tragseilabschnitt 20 gekoppelt ist und dem zweiten Tragseilabschnitt 20 zusätzlich mit dem Spannseilabschnitt 56 und damit mit dem Untergrund verspannt. Vorzugsweise ist die zweite Hilfsspannseilanordnung 64 und der zweite Spannseilabschnitt 56 gemäß einem Loslager miteinander gekoppelt, um eine relative Verlagerung von der zweiten Hilfsspannseilanordnung 64 und dem zweiten Spannseilabschnitt 56 zu ermöglichen. Die Hilfsspannseilanordnungen 60, 64 sind im Wesentlichen gemäß einem Festlager, also spielfrei, mit dem jeweiligen Tragseilabschnitt 18, 20 gekoppelt. Zusätzlich könnten auch weitere Hilfsspannseilanordnungen vorgesehen sein, sodass beispielsweise die erste Spannseilanordnung 50 lediglich über Hilfsspannseilanordnungen mit dem jeweiligen Tragseilabschnitt 18, 20 gekoppelt ist. Es versteht sich, dass beispielsweise der Spannseilabschnitt 54 und die Hilfsspannseilanordnung 60 oder die Spannseilabschnitt die 54, 56 und die Hilfsspannseilanordnung 60, 64 als gemeinsames Seil ausgebildet sein können. Die Spannseilabschnitte 54, 56 greifen jeweils in einem Bereich der Tragseilabschnitte 18, 20 an, an dem auch jeweils ein Tragseilstabilisierungselement 46 angeordnet ist. Auch die Hilfsspannseilanordnung und 60, 64 greifen jeweils in einem Bereich der Tragseilabschnitte 18, 20 an, an dem auch jeweils ein Tragseilstabilisierungselement 46 angeordnet ist. Die Fundamente 58, 62 sind im Bereich der ersten Stützanordnung 12 an dem Untergrund ausgebildet. Um eine möglichst große Durchfahrtsbreite zwischen der ersten Stützanordnung 12 und der zweiten Stützanordnung 14 zu gewährleisten, versteht es sich, dass die Fundamente 58, 62 möglichst weit außen, beispielsweise zumindest auf Höhe der Fundamente 38, 40, angeordnet sind. Die zweite Spannseilanordnung 52 ist im Wesentlichen analog zur ersten Spannseilanordnung 50 ausgebildet, verspannt die Tragseilabschnitte 18, 20 jedoch in Richtung der zweiten Stützanordnung 14. So umfasst die zweite Spannseilanordnung 52 ebenfalls einen ersten Spannseilabschnitt 66 und einen zweiten Spannseilabschnitt 68, sowie eine erste Hilfsspannseilanordnung 70 und eine zweite Hilfsspannseilanordnung 72. Ferner sind die Spannseilabschnitte 66, 68 jeweils mit einem am Untergrund ausgebildeten Fundament 74, 76 gekoppelt und verspannt.

Vorliegend ist die Vorrichtung 10 vollständig symmetrisch bezüglich einer imaginären Symmetrieebene im Bereich zwischen der ersten und der zweiten Stützanordnung 12, 14 ausgebildet, wobei dies auch anders vorgesehen sein könnte. So könnte die Vorrichtung 10 beispielsweise auch lediglich teilweise symmetrisch bezüglich dieser Symmetrieebene oder nicht symmetrisch ausgebildet sein.

Der erste und der zweite Tragseilabschnitt 18, 20 definieren im Bereich zwischen der ersten und der zweiten Stützanordnung 12, 14 eine imaginäre Tragseilfläche 71, wobei die Tragseilfläche 71 eine imaginäre Verbindungslinie 73 umfasst, die senkrecht zu dem ersten und dem zweiten Tragseilabschnitt 18, 20 ausgerichtet ist und diese miteinander verbindet, wobei die Verbindungslinie 73 zumindest abschnittsweise parallel oder in einem Winkel zu dem Untergrund ausgerichtet oder ausrichtbar ist. Zwar sind die Tragseilabschnitte 18, 20 gespannt. Dennoch hängen diese aufgrund der Vorspannung durch die Spannseilanordnungen 50, 52, der Schwerkraft und/oder zur Aufnahme von in Richtung Untergrund wirkenden Kräften im Bereich zwischen der ersten und der zweiten Stützanordnung 12, 14 durch, wobei die maximale Durchhängung mit D dargestellt ist. Entsprechend weist auch die Tragseilfläche eine gemäß den Tragseilabschnitten 18, 20 gekrümmte Form auf.

In Figur 1 sind ferner beispielhafte Seilrichtungen SR für die Tragseilabschnitte 18, 20 für den Bereich dargestellt, an dem die Tragseilabschnitte 18, 20 an den Stützanordnungen 12, 14 angeordnet sind. Es versteht sich, dass die Seilrichtung SR aufgrund der auftretenden Durchhängung D entlang der Tragseilabschnitte 18, 20 variiert. Die beiden Stützanordnungen sind relativ zu den Seilrichtungen SR jeweils geneigt angeordnet. Dies dient dazu, die in den Tragseilabschnitten 18, 20 wirkenden Seilkräfte möglichst effizient durch die Stützanordnungen 12, 14 zumindest teilweise aufzunehmen bzw. die Tragseilabschnitte 18, 20 möglichst effizient gegenüber dem Untergrund zu beabstanden. Es versteht sich, dass die Neigung so gewählt sein kann, dass eine Hauptbelastung oder gar eine im Wesentlichen einzige Last in den Stützpfosten 22, 24, 26, 28 entlang einer Längsachse der Stützpfosten 22, 24, 26, 28 wirkt. Es versteht sich ferner, dass die Neigung in Abhängigkeit der Seilkräfte, insbesondere in Abhängigkeit einer Vorspannung der Tragseilanordnung 16, insbesondere der Tragseilabschnitte 18, 20, gewählt sein kann. Die Neigung relativ zu der Seilrichtung SR kann beispielsweise im Bereich von 45° bis 80° gewählt sein.

Typische, jedoch lediglich beispielhafte, Abmessungen sehen bei einer Spannweite von 25 m zwischen den oberen Enden der ersten und der zweiten Stützanordnung 12, 14 wie folgt aus. Die Durchhängung D der Tragseilabschnitte 18, 20 kann dann in etwa 2 m betragen. Eine gewünschte Durchfahrthöhe unterhalb der Tragseilanordnung 16 im Bereich zwischen den Stützanordnungen 12, 14 kann 5,6 m betragen. Dies ermöglicht die Durchfahrt für Landmaschinen großer Bauhöhe. Ein in Richtung Untergrund gemessener Abstand A der Spannseilanordnung 50 von den Tragseilabschnitten 18, 20 im Bereich der Stützanordnung 12 kann dann in etwa oder zumindest 2 m betragen, um eine ausreichende Stabilisierungswirkung auf die Tragseilanordnung 16 auszuüben. Gleiches kann für die Spannseilanordnung 52 mit Bezug auf die Stützanordnung 14 gelten.

Dementsprechend kann vorgesehen sein, dass die Stützanordnungen 12, 14 eine senkrechte Höhe bzw. einen Abstand gegenüber dem Untergrund von zumindest etwa (5,5 m + 2 m =) 7,6 m aufweisen.

Typischerweise sind die beiden Stützanordnungen 12, 14 bzw. benachbarte Stützanordnungen einer Vorrichtung 10 in einem Abstand (Spannweite) von 6 bis 25 m zueinander angeordnet, wobei auch größere Abstände wie beispielsweise 50 m vorgesehen sein können. Vorteilhafterweise sind die Tragseilanordnung 16 und die Spannseilanordnung 50, 52 derart hoch angeordnet, dass der Abstand zwischen den Stützanordnungen 12, 14 begrifflich der Durchfahrtsbreite für Fahrzeuge gleichzusetzen ist.

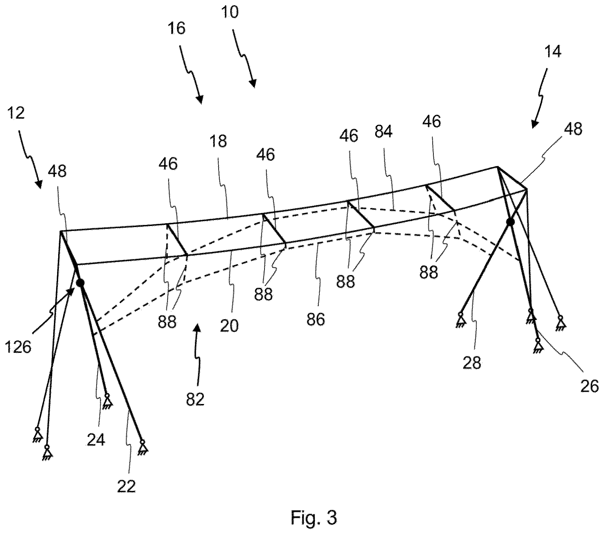

Vorteilhafterweise sind die Stützpfosten 22, 24, 26, 28 aufgrund der wirkenden Kräfte schräg bzw. geneigt gegenüber dem Untergrund bzw. der Lotrichung ausgerichtet (siehe insbesondere auch Figuren 3, 5, 8a). Die Neigung gegen die Senkrechte ist u.a. abhängig von Untergrund und/oder der sonstigen Verankerung im Untergrund und kann im Bereich von ca. 10 bis 45° liegen. Gleiches kann für die Ausrichtung Tragseilabschnitte und/oder Spannseilabschnitte im Bereich derer Anbringung am Untergrund gelten.

Bei einer Spannweite von 25 m können typische Seilkräfte der Tragseilabschnitte 18, 20 an einem jeweiligen Fundament 30, 34, 42, 44 mehr als 100 kN betragen. Ferner können in den Spannseilabschnitten 54, 56, 60, 64, 66, 68, 70, 72 geringere Seilkräfte als in den Tragseilabschnitten 18, 20 wirken. So können diese in etwa halb oder in etwa nur ein Drittel so groß ausfallen. Typischerweise kann eine Seilkraft in einem Spannseilabschnitt etwa 50 kN betragen. Es versteht sich, dass die Vorrichtung 10 Sicherheitsreserven aufweist und somit für größere Lasten ausgelegt ist. Ferner versteht es sich, dass auftretende (Seil-)Kräfte abhängig von der Größe und tatsächlicher Ausgestaltung der Vorrichtung 10 ausfallen.

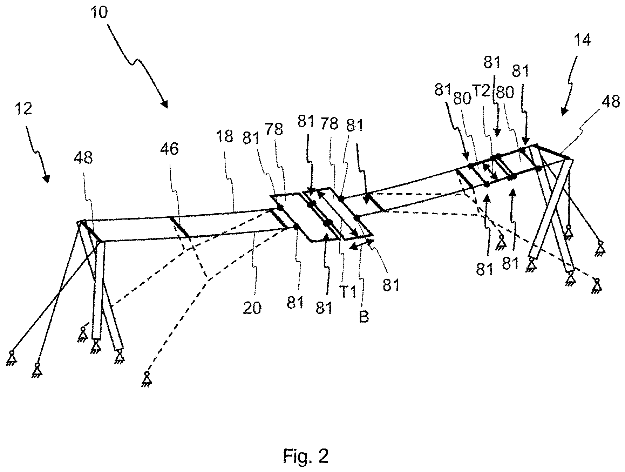

Figur 2 betrifft eine schematische Darstellung einer erfindungsgemäßen Vorrichtung 10, wobei die Vorrichtung 10 exemplarisch vier Energiegewinnungsmodule 78, 80 trägt. Der übrige Aufbau der Vorrichtung 10 entspricht im Wesentlichen dem aus Figur 1. Die Energiegewinnungsmodule 78, 80 sind in einem Bereich zwischen den Stabilisierungsanordnungen 12, 14 auf den Tragseilabschnitten 18, 20 angebracht. So sind die Energiegewinnungsmodule 78, 80 nach oben hin unverdeckt, sodass Sonnenlicht direkt auf die Energiegewinnungsmodule 78, 80 einwirken kann. Die Energiegewinnungsmodule 78, 80 können unterschiedliche Größen aufweisen und unterschiedlich an den Tragseilabschnitt 18, 20 angebracht sein. Exemplarisch sind die beiden Energiegewinnungsmodule 78 größer ausgebildet als die beiden Energiegewinnungsmodule 80. Die Energiegewinnungsmodule 78 sind im Wesentlichen rechteckförmig ausgebildet und weisen eine Breite B und eine Tiefe T1 auf. Die Tiefe T1 ist größer als der Abstand zwischen den Tragseilabschnitten 18, 20 im Bereich zwischen den Stützanordnungen 12, 14. Insofern übertragen die Energiegewinnungsmodule 78 die Tragseilabschnitte 18, 20. Vorzugsweise ist die Tiefe T1 so gewählt, dass im Falle von mehreren nebeneinander angeordneten Vorrichtungen 10 eine gegenseitige Berührung von Energiegewinnungsmodulen benachbarter Vorrichtungen vermieden werden kann, jedoch möglichst viel Fläche von den Energiegewinnungsmodulen bedeckt ist.

Die Energiegewinnungsmodule 80 sind kleiner als die Energiegewinnungsmodule 78 ausgebildet, denn sie weisen zumindest eine geringere Tiefe T2 auf. Die Tiefe T2 entspricht im Wesentlichen dem Abstand zwischen den Tragseilabschnitten 18, 20 im Bereich zwischen der ersten Stützanordnung 12 und der zweiten Stützanordnung 14, wobei die Tiefe T2 auch kleiner gewählt sein könnte.

Die Energiegewinnungsmodule 78, 80 sind in einem geringfügigen Abstand zueinander angeordnet, wobei diese auch direkt aneinander anliegend oder in einem größeren Abstand zueinander angeordnet sein könnten. Der Abstand kann so gewählt sein, dass eine gewünschte Lichtmenge und/oder Niederschlagsmenge den Untergrund auch unterhalb der Energiegewinnungsmodule 78, 80 erreicht. Die Energiegewinnungsmodule 78, 80 können im Wesentlichen im gesamten Bereich zwischen der ersten Stützanordnung 12 und der zweiten Stützanordnung 14 an den Tragseilabschnitt 18, 20 angeordnet sein.

Um die Energiegewinnungsmodule 78, 80 mit der Tragseilanordnung 16 zu koppeln, sind vorliegend je Energiegewinnungsmodul vier Lageranordnungen 81 vorgesehen. Die Lageranordnungen 81 können beispielsweise als Verbindungsklemmen oder -ösen ausgebildet sein, die das Modul mit einem jeweiligen Tragseilabschnitt 18, 20 koppeln. Ferner kann vorgesehen sein, die Energiegewinnungsmodule 78, 80 auf einer Trägeranordnung anzuordnen, die wiederum mit der Tragseilanordnung 16 gekoppelt ist, wie dies folgend noch näher beschrieben werden wird. Dann können die Module beispielsweise mittels bekannter Mittel zum Anbringen von Photovoltaikmodulen auf Dachkonstruktionen an der Trägeranordnung angebracht sein. Zumindest eine der Lageranordnungen kann als Festlager ausgebildet sein und somit Spiel relativ zu dem Tragseil unterbinden. Vorzugsweise ist jedes Modul mittels zumindest einem jeweiligen Festlager mit dem jeweiligen Tragseilabschnitt 18, 20 gekoppelt. Zumindest eine der Lageranordnungen kann als Loslager ausgebildet sein und somit Spiel relativ zu dem Tragseil in zumindest einer Richtung bereitstellen. Vorzugsweise ist jedes Modul mittels zumindest einem jeweiligen Loslager mit dem jeweiligen Tragseilabschnitt 18, 20 gekoppelt.

Die Energiegewinnungsmodule 78, 80 können im Wesentlichen im gesamten Bereich zwischen der ersten und der zweiten Stützanordnung 12, 14 an der Tragseilanordnung 16 angeordnet sein.

Figur 3 betrifft eine schematische Darstellung einer Ausführungsform der erfindungsgemäßen Vorrichtung 10. Die in Figur 3 dargestellte Vorrichtung 10 entspricht abgesehen von der Spannseilanordnung im Wesentlichen der aus Figur 1. Allerdings sind die Spannseilanordnungen hier nicht nach außen geführt, sondern unter der Tragseilanordnung 16 gekreuzt bzw. überlagt ausgebildet. Zusätzlich ist die Spannseilanordnung 82 durchgehend zwischen der zugehörigen ersten Stützanordnung 12 und der zugehörigen zweiten Stützanordnung 14 ausgebildet, wobei dies auch wie vorangehend beschrieben ausgeführt sein könnte. So umfasst die Spannseilanordnung 82 einen ersten Spannseilabschnitt 84 und einen zweiten Spannseilabschnitt 86. Die Spannseilabschnitte 84, 86 sind über jeweilige Hilfsspannseilanordnung 88, vorliegend jeweils vier Hilfsspannanordnungen 88, mit dem jeweiligen Tragseilabschnitt 18, 20 gekoppelt.

Alternativ zu der Kopplung der Spannseilabschnitte 84, 86 mit dem Untergrund mittels Fundamenten kann wie vorliegend auch vorgesehen sein, dass ein jeweiliger Spannseilabschnitt 84, 86 mit entsprechenden Stützpfosten der Stützanordnungen 12, 14 gekoppelt ist. Dies ist insbesondere sinnvoll bei höherer Aufständerung, beispielsweise um eine größere Durchfahrthöhe zu realisieren. Dann kann vorgesehen sein, dass die Koppelungspunkte der Spannseile der Spannseilanordnung 82 nun nicht mehr bis auf Höhe Oberkante Untergrund anzuordnen sind, um eine ausreichende Stabilisierungswirkung auf die Tragseilanordnung 16 auszuüben, sondern dass eine Höhe H an der entsprechenden Stützanordnung 12, 14 aufgrund eines zu erreichenden Abstands A bereits ausreichend ist. Diese Höhe H kann der minimalen gewünschten Durchfahrthöhe entsprechen.

Vorliegend ist der erste Spannseilabschnitt 84 mit einem mittigen Bereich des ersten Stützpfostens 22 und der zweite Spannseilabschnitt 86 mit einem mittigen Bereich des zweiten Stützpfostens 24 gekoppelt. Ferner ist der erste Spannseilabschnitt 84 mit einem mittigen Bereich des ersten Stützpfostens 26 und der zweite Spannseilabschnitt 86 mit einem mittigen Bereich des zweiten Stützpfostens 28 gekoppelt. Der mittige Bereich ist in Figur 3 jeweils unterhalb einer Überlagerung der jeweiligen Stützpfosten 22, 24, 26, 28 angeordnet, um eine räumlich weitreichende, dreidimensionale Verspannung zu erreichen Insofern sind die Spannseilabschnitte 84, 86 im Bereich der Stützanordnungen 12, 14 zumindest bei Betrachtung von oben X-förmig und einander überlagernd angeordnet. Dies dient dazu, die Tragseilabschnitte 18, 20 zusätzlich zu verspannen und nach innen zu führen. Je nach erforderlicher Vorspannkraft, insbesondere in Richtung Untergrund, kann die Anbringung der Spannseilabschnitte 84, 86 an den Stützpfosten 22, 24, 26, 28 auch direkt am Kreuzungspunkt (Überlagerungspunkt) der Stützpfosten 22, 24, 26, 28 oder an einem darüber liegenden Punkt an den Stützpfosten 22, 24, 26, 28 erfolgen. Die Anbringung der Spannseilabschnitte 84, 86 an den Stützpfosten 22, 24, 26, 28 in einem mittigen oder darüber liegenden Bereich dient dazu, eine größere Durchfahrtshöhe im Bereich der Stützanordnungen 12, 14 zu ermöglichen.

In dem Bereich, in dem sich die beiden Stützpfeiler 22, 24 überlagern, ist eine Kopplungsanordnung 126 vorgesehen. Diese kann beispielsweise einen Bolzen umfassen, der die beiden Stützpfeiler 22, 24 miteinander koppelt. Zusätzlich oder stattdessen kann die Kopplungsanordnung 126 beispielsweise einen Gurt umfassen, der die Stützpfeiler 22, 24 umgibt und aufeinanderdrückt. Die Kopplungsanordnung 126 dient dazu, die erste Stützanordnung 12 zusätzlich zu stabilisieren und kann an jeder der Stützanordnungen und/oder einer Hilfsstützanordnungen, wie sie im Folgenden noch beschrieben werden wird, ausgebildet sein. Ferner ist das Stützpfeilerstabilisierungselement 48 vorgesehen, das dazu vorgesehen ist, Zug und/oder Druckkräfte aufzunehmen, um so zumindest im Bereich der Kopplung mit den Stützpfeilern 22, 24 eine Bewegung dieser relativ zueinander, insbesondere aufeinander zu oder voneinander weg, zu unterbinden.

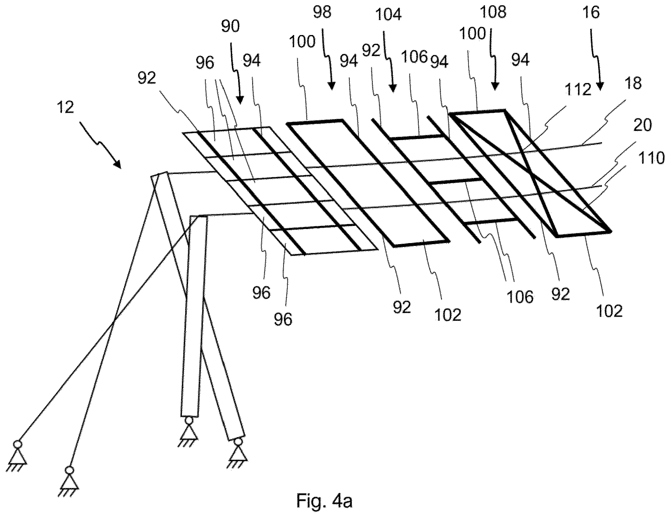

Figur 4a betrifft eine schematische Detaildarstellung einer erfindungsgemäßen Vorrichtung 10 mit beispielhaften Trägerkonstruktionen, wobei die Vorrichtung 10 lediglich im Bereich der ersten Stützanordnung 12 dargestellt ist und ferner aus Gründen der Einfachheit keine Spannseilanordnung und keine Hilfsspannseilanordnungen dargestellt sind. Ferner sind Energiegewinnungsmodule lediglich im Zusammenhang mit einer ersten Trägerkonstruktion 90 dargestellt.

Die erste Trägerkonstruktion 90 umfasst eine erste Lagerschiene 92 und eine zweite Lagerschiene 94, die im Wesentlichen parallel zueinander ausgerichtet sind. Die Lagerschienen 92, 94 sind im Wesentlichen als gerade Schienen gleicher Länge ausgebildet und dazu vorgesehen, Energiegewinnungsmodule zu lagern und mit der Tragseilanordnung 16, vorliegend den Tragseilabschnitten 18, 20, zu koppeln. Eine jeweilige Längsachse der Lagerschienen 92, 94 ist im Wesentlichen senkrecht zu den Tragseilabschnitten 18, 20 ausgerichtet. Vorliegend trägt die erste Trägerkonstruktion 90 fünf im Wesentlichen gleich ausgebildete, rechteckflächige Energiegewinnungsmodule 96, die nebeneinander und mit minimalem Anstand zueinander an der Trägerkonstruktion 90 angeordnet sind. Die Anzahl der Energiegewinnungsmodule 96 ist lediglich exemplarisch.

Eine zweite Trägerkonstruktion 98 basiert auf der ersten Trägerkonstruktion 90 und umfasst zusätzlich eine dritte Lagerschienen 100 und eine vierte Lagerschiene 102. Die Lagerschienen 92, 94, 100, 102 bilden zusammen eine Rechteckform. Die zusätzlichen Lagerschienen 100, 102 bewirken eine zusätzliche Steifigkeit der zweiten Trägerkonstruktion 98.

Eine dritte Trägerkonstruktion 104 umfasst ähnlich wie die erste Trägerkonstruktion 90 die erste Lagerschiene 92 und die zweite Lagerschiene 94, wobei jedoch zusätzlich drei Lagerschiene 106 vorgesehen sind, die jeweils die erste Lagerschiene 92 und die zweite Lagerschiene 94 miteinander verbinden. Insgesamt ist die dritte Trägerkonstruktion 104 leiterförmig ausgebildet.

Eine vierte Trägerkonstruktion 108 basiert auf der zweiten Trägerkonstruktion 98 und umfasst zusätzlich eine erste diagonale Versteifungsanordnung 110 und eine zweite diagonale Versteifungsanordnung 112. Die Versteifungsanordnungen 110, 112 können ebenfalls starr oder als Zugelemente, wie beispielsweise Zugseile, ausgebildet sein. Die Versteifungsanordnungen 110, 112 dienen dazu, dass rechteckförmige Gebilde aus den vier Lagerschienen 92, 94, 100, 102 zusätzlich zu versteifen.

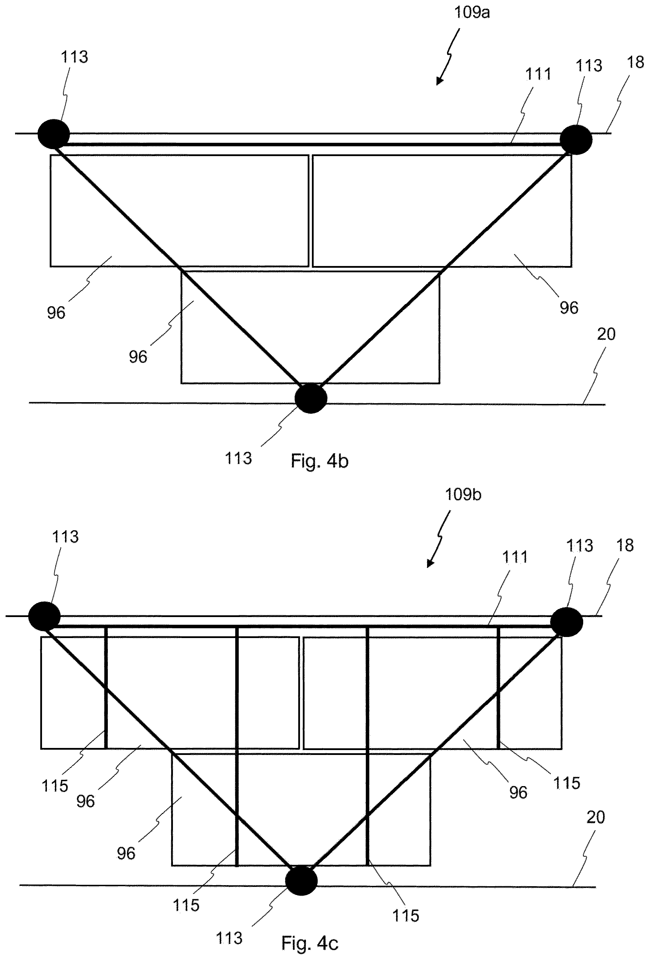

Eine fünfte Trägerkonstruktion 109a (siehe Figur 4b) und eine sechste Trägerkonstruktion 109b (siehe Figur 4c) umfasst einen dreieckförmigen Rahmen 111, der an jeweiligen Eckpunkten über jeweilige Verbindungsmittel 113 mit dem jeweiligen Tragseilabschnitt 18, 20 gekoppelt ist. Die Verbindungsmittel 113 können eine drehbare und/oder schwimmende Lagerung bereitstellen. Gemäß Figur 4b sind Energiegewinnungsmodule 96 direkt auf dem Rahmen 111 gelagert. Gemäß Figur 4c sind Lagerschienen 115 vorgesehen, die auf dem Rahmen 111 angeordnet sind und auf denen wiederum exemplarisch die Energiegewinnungsmodule 96 gelagert sind. Im Besonderen können die Lagerschienen 115 an einem sog. Viertelpunkt, also in etwa bei einem Viertel der Länge des Energiegewinnungsmoduls 96, angeordnet sein. Aufgrund der sich ergebenden DreipunktLagerung der durch den Rahmen 111 aufgespannten Fläche bewirkt eine Verformung der Tragseilanordnung 16 (oder zumindest einem der Tragseilabschnitte 18, 20) keine Verformung der durch den Rahmen 111 aufgespannten, ebenen Fläche. Mit beiden Lösungen können Energiegewinnungsmodule 96 verwindungsfrei montiert werden, auch wenn - beispielsweise aufgrund sehr großer Spannweiten oder aufgrund sehr niedriger Vorspannung der Tragseilanordnung 16 oder der Spannseilanordnung - die Tragseilanordnung 16 für Trägerkonstruktionen gem. 90, 98, 104, 108 (Figur 4a) oder ähnlich oder für die Direktmontage einzelner Energiegewinnungsmodule 96 auf den Tragseilabschnitten 18, 20 keine ausreichende (Verwindungs-)Steifigkeit bietet. Es versteht sich, dass benachbart zu einem wie vorliegend gezeigten dreieckförmigen Rahmen 111 ein weiterer, im Wesentlichen gleicher dreieckförmiger Rahmen vorgesehen sein kann, der jedoch eine umgekehrte Orientierung aufweisen kann. Ist der vorliegende Rahmen 111 mittels zwei Verbindungsmitteln 113 mit dem ersten Tragseilabschnitt 18 und mittels einem Verbindungsmittel 113 mit dem zweiten Tragseilabschnitt 20 gekoppelt, kann der weitere Rahmen aufgrund der geänderten Orientierung des Rahmens mittels zwei Verbindungsmitteln 113 mit dem zweiten Tragseilabschnitt 20 und mittels einem Verbindungsmittel 113 mit dem ersten Tragseilabschnitt 18 gekoppelt sein. Es versteht sich ferner, dass die Anzahl an Energiegewinnungsmodulen 96 je Rahmen 111 beliebig ist und auch lediglich je Rahmen ein Energiegewinnungsmodul 96, zwei, drei, vier oder mehr Energiegewinnungsmodule 96 vorgesehen sein können. Weiterhin können sowohl im Falle der Direktmontage auf den dreieckförmigen Rahmen 111 (Figur 4b) als auch im Falle der Montage auf Lagerschienen 115 (Figur 4c) die Energiegewinnungsmodule 96 in Richtung quer zu den Tragseilabschnitten 18, 20 über den dreieckförmigen Rahmen 111 und/oder über die Tragseilabschnitte 18, 20 hinaus ragen.

Insgesamt dienen die Trägerkonstruktionen 90, 98, 104, 108, 109a, 109b neben der Lagerung der Energiegewinnungsmodule 96 auf den Tragseilanordnung 16 dazu, die Energiegewinnungsmodule 96 möglichst lastfrei bzw. spannungsfrei zu lagern. Man denke hierbei an statische und an dynamische Lasten. Beispielsweise dienen die Trägerkonstruktionen 90, 98, 104, 108, 109a, 109b dazu, die Energiegewinnungsmodule derart zu lagern, dass eine Verformung der Tragseilanordnung 16 beispielsweise aufgrund einer Windlast zu keiner oder lediglich zu einer geringfügigen Belastung der Energiegewinnungsmodule 96 führt. Insofern kann vorgesehen sein, dass die Trägerkonstruktionen 90, 98, 104, 108, 109a, 109b steif, insbesondere biege- und torsionssteif, ausgebildet sind. Für die Lagerschienen 92, 94, 100, 102, 106 bzw. den Rahmen 111 können beispielsweise Strangprofile und/oder Hohlprofile und/oder Standardprofile vorgesehen sein. Ferner können die Lagerschienen 92, 94, 100, 102, 106 bzw. der Rahmen 111 ähnlich wie Schienen von Dachkonstruktionen für Photovoltaikmodule ausgebildet sein. Entsprechend können die Energiegewinnungsmodule 96 mittels bekannten Verbindungsmittel wie Klemmen mit dem Lagerschienen 92, 94, 100, 102, 106 bzw. dem Rahmen 111 gekoppelt sein. Um einen möglichst geringe Spannungsübertragung von der Tragseilanordnung 16 auf die Trägerkonstruktionen 90, 98, 104, 108, 109a, 109b zu bewirken, kann vorgesehen sein, dass eine jeweilige Trägerkonstruktion 90, 98, 104, 108, 109a, 109b mit einem jeweiligen Tragseilabschnitt 18, 20 mittels eines Festlagers und ferner mittels zumindest eines weiteren Loslagers gekoppelt ist, wobei das Loslager zumindest eine gewisse Verlagerung zwischen der Trägerkonstruktion 90, 98, 104, 108, 109a, 109b und dem jeweiligen Tragseilabschnitt 18, 20 in Richtung des Tragseilabschnitts zulässt. In diesem Zusammenhang sei auf die vorangehend beschriebenen Lageranordnungen 81 verwiesen, die für die jeweilige Kopplung von Trägerkonstruktion 90, 98, 104, 108, 109a, 109b und Tragseilabschnitt 18, 20 vorgesehen sein können.

Die vorangehend dargestellten Trägerkonstruktionen 90, 98, 104, 108, 109a, 109b sind lediglich beispielhaft und es können auch andere Trägerkonstruktionen vorgesehen sein. Man denke beispielsweise an eine X-förmige, ovale, kreisförmige, flächige etc. Tragekonstruktion. Ferner kann die Tragekonstruktion als Platte ausgebildet sein oder eine solche umfassen.

Generell ist für die Steifigkeit der Gesamtkonstruktion, also der Vorrichtung 10, auf Ebene der Energiegewinnungsmodule das Zusammenspiel zwischen Steifigkeit der Seilkonstruktion, also insbesondere Tragseilanordnung 16 und/oder Spannseilanordnung 50, 52, und Steifigkeit der Trägerkonstruktionen 90, 98, 104, 108, 109a, 109b maßgeblich. Eine hohe Steifigkeit der dreidimensionalen Seilbinder (also insbesondere der Tragseilanordnung 16 und/oder der Spannseilanordnung 50, 52) erfordert weniger steife Trägerkonstruktionen und umgekehrt.

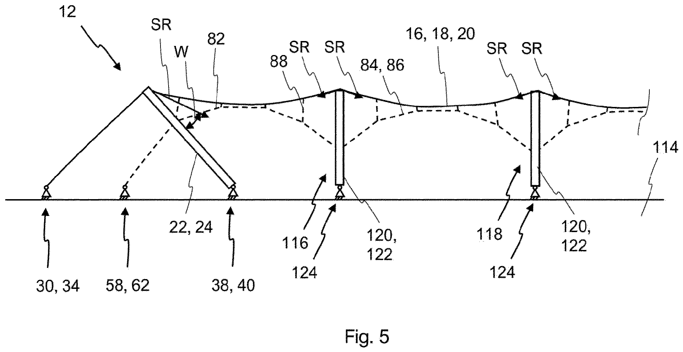

Figur 5 betrifft eine schematische Darstellung einer Ausführungsform der erfindungsgemäßen Vorrichtung 10. Die erfindungsgemäße Vorrichtung 10 ist lediglich teilweise, wie dies die rechtsseitige Abbruchkante signalisiert, und vereinfacht dargestellt, sodass beispielsweise lediglich einer der Stützpfosten 22, 24 der ersten Stützanordnung 12 dargestellt ist. Die seitliche Darstellung eignet sich besonders gut, um die Neigung der Stützpfosten 22, 24 relativ zu dem Untergrund 114 bzw. der Lotrichtung zu erkennen, wobei die Neigung vorliegend einem Winkel der Längsachse der Stützpfosten 22, 24 relativ zu dem Untergrund 114 von im Wesentlichen 45° entspricht, wobei auch andere Winkel vorgesehen sein können.

Zusätzlich zu der beispielsweise in Figur 3 dargestellten Vorrichtung 10 umfasst die vorliegende Vorrichtung ferner eine erste Hilfsstützanordnung 116 und eine zweite Hilfsstützanordnung 118, die jeweils dazu eingerichtet sind, die Tragseilanordnung 16 in einem Bereich zwischen der ersten und der zweiten Stützanordnung 12, 14 gegenüber dem Untergrund 114 zu halten und gegenüber diesem zu beabstanden. Die Hilfsstützanordnung in 116, 118 können grundsätzlich ähnlich wie die Stützanordnungen 12, 14 ausgebildet sein und so beispielsweise eine X-Form aufweisen. Allerdings sind die Hilfsstützanordnung in 116, 118 gegenüber dem Untergrund 114 nicht geneigt bzw. relativ zu diesen in einem Winkel von im Wesentlichen 90° angeordnet. Dies wird besonders dann angestrebt, wenn durch die Tragseilanordnung 16 und die Spannseilanordnung 82 an den jeweiligen Hilfsstützanordnungen 116, 118 angreifende Kräfte einander zumindest in Richtung der ersten und zweiten Stützanordnung 12, 14 aufheben.

Ähnlich wie bei den Stützanordnungen 12, 14 sind die Tragseilabschnitte 18, 20 mit einem oberen Ende jeweiliger Hilfsstützpfosten 120, 122 der Hilfsstützanordnungen 116, 118 gekoppelt. Ferner sind die Hilfsstützanordnung 116, 118 mittels jeweiligen Fundamenten 124 mit dem Untergrund 114 gekoppelt. Vorzugsweise ist ein Abstand der Tragseilanordnung 16 im Bereich der Hilfsstützanordnungen 116, 118 relativ zu dem Untergrund 114 im Wesentlichen gleich wie ein Abstand der Tragseilanordnung 16 relativ zu dem Untergrund im Bereich der ersten Stützanordnung 12 und der zweiten Stützanordnung 14.

Um eine möglichst hohe Durchfahrtshöhe und Durchfahrtsbreite zwischen benachbarten Hilfsstützanordnungen 116, 118 und zwischen einer Hilfsstützanordnung 116, 118 und einer benachbarten der Stützanordnungen 12, 14 zu erreichen, ist die Spannseilanordnung 82 im Bereich der Hilfsstützanordnungen 116, 118 nicht direkt mit dem Untergrund 114 gekoppelt, sondern mit einer jeweiligen Hilfsstützanordnung 116, 118. Dies kann wie vorliegend gezeigt ein mittiger Bereich der Hilfsstützanordnungen 116, 118 sein, aber auch der Bereich der Überlagerung (Kreuzungspunkt) der Hilfsstützpfosten 120, 122 oder ein darüber oder darunter liegender Bereich. Zur Vermeidung von Spannungsspitzen greift die Spannseilanordnung 82 einerseits und andererseits einer jeweiligen Hilfsstützanordnung 116, 118 im Wesentlichen in derselben Höhe an der jeweiligen Hilfsstützanordnung 116, 118 an.

In Figur 5 sind ferner die Seilrichtungen SR im Bereich der Stützanordnung 12 und der Hilfsstützanordnungen 116, 118 dargestellt. Es ist erkennbar, dass die Stützanordnung 12 relativ zu der dieser zuordenbaren Seilrichtung SR geneigt ausgerichtet ist, und zwar in einem beispielhaften Winkel W von im Wesentlichen 35°, wobei auch andere Winkel, beispielsweise im Bereich von 20° bis 80°, vorgesehen sein könnten. Die Hilfsstützanordnungen 116, 118 sind im Wesentlichen gleich gegenüber den diesen zuordenbaren Seilrichtung SR ausgerichtet. Abhängig von der Spannweite und der Last auf den Tragseilabschnitten 18, 20 kann der Winkel W auch in etwa 90° betragen, beispielsweise wenn die Stützpfeiler 22, 24 im Wesentlichen senkrecht gegenüber dem Untergrund angeordnet sind und die Tragseilabschnitte 18, 20 stark vorgespannt sind und so im Wesentlichen keine oder lediglich eine geringe Durchhängung D aufweisen.

Die beiden Stützpfeiler 22, 24 sind gegenüber dem Untergrund in einem Winkel von etwa 45 bis 80 Grad geneigt und dabei nach außen überhängend angeordnet, wobei auch andere Winkel beispielsweise in Abhängigkeit von einer vorhandenen Vorspannung der Tragseilanordnung 16 vorgesehen bzw. gewählt sein können. Gleiches gilt für die Stützpfeiler 26, 28, die ebenfalls entsprechend geneigt und nach außen überhängend angeordnet sind.

Figur 6a betrifft eine schematische Darstellung einer Anordnung 400 zum Tragen von Energiegewinnungsmodulen. Die Anordnung 400 umfasst eine erste Vorrichtung 402 zum Tragen von Energiegewinnungsmodulen und eine zweite Vorrichtung 404 zum Tragen von Energiegewinnungsmodulen, wobei die jeweiligen Vorrichtungen 402, 404 wie vorangehend beschrieben ausgeführt sein können. Natürlich kann die Anordnung 400 auch mehr als zwei, beispielsweise zumindest drei oder mehr Vorrichtungen umfassen. Vorliegend basieren die Vorrichtungen 402, 404 im Wesentlichen auf der Vorrichtung 10 aus Figur 1 und sind weitgehend gleich ausgebildet.

Die zweite Vorrichtung 404 ist seitlich neben der ersten Vorrichtung 402 angeordnet, wobei die jeweiligen ersten Stützanordnungen 406, 408 sowie die jeweiligen zweiten Stützanordnungen 410, 412 bei seitlicher Betrachtung in wesentlichen fluchtend zueinander angeordnet sind. Ferner ist die Spannweite der jeweiligen Tragseilanordnung 414, 416 zwischen der ersten Stützanordnung 406, 408 und der zweiten Stützanordnung 410, 412 im Wesentlichen gleich.

Um eine möglichst platzsparende Anordnung 400 bereitzustellen, ist der der zweiten Vorrichtung 404 benachbarte Spannseilabschnitt 418 mit der ersten Stützanordnung 408 gekoppelt und der der zweiten Vorrichtung 404 benachbarte Spannseilabschnitt 420 mit der zweiten Stützanordnung 412 gekoppelt. Ferner ist der der ersten Vorrichtung 402 benachbarte Spannseilabschnitt 422 mit der ersten Stützanordnung 406 gekoppelt und der der ersten Vorrichtung 404 benachbarte Spannseilabschnitt 424 mit der zweiten Stützanordnung 410 gekoppelt. Anders ausgedrückt sind die Spannseilabschnitte 418, 420 der ersten Vorrichtung 402 mit der zweiten Vorrichtung 404 gekoppelt und die Spannseilabschnitte 422, 424 der zweiten Vorrichtung 404 mit der ersten Vorrichtung 402 gekoppelt. Neben der platzsparenden Anordnung ermöglicht dies, Fundamente in dem Untergrund einzusparen.

Wie bereits vorstehend beschrieben, können die Koppelungspunkte der Spannseile an den benachbarten Stützenanordnungen 406, 408, 410, 412 sowohl auf Höhe der Fundamente der Stützanordnungen 406, 408, 4110, 412 (also in etwa an der Oberkante des Untergrunds) und/oder in einem mittigen Bereich und/oder im Bereich der Überlagerung (Kreuzungspunkt) der Stützpfosten (siehe Figur 6b) und/oder darüber und/oder darunter vorgesehen sein.

Figur 6b betrifft eine schematische Detaildarstellung einer Ausführungsform der Anordnung 400, ähnlich wie aus Figur 6a bekannt. Neben der ersten Vorrichtung 402 und der zweiten Vorrichtung 404 ist exemplarisch auch eine dritte Vorrichtung 405 dargestellt. Im Gegensatz zu der Anordnung 400 aus Figur 6a sind die in Figur 6b dargestellten Spannseilanordnungen, insbesondere die jeweiligen Spannseilabschnitte 418, jedoch derart ausgebildet, dass sie nicht am Untergrund, sondern im Bereich der Überlagerung der jeweiligen Stützanordnung 406, 408, 409 an dieser angebracht sind, wobei diese auch an einem anderen Bereich der Stützanordnungen 406, 408, 409 angeordnet sein könnten. Die Anbringung an den Stützanordnungen 406, 408, 409 ermöglicht eine besonders große Durchfahrtshöhe und/oder Durchfahrtsbreite. Es könnte auch vorgesehen sein, dass zumindest einer der Spannseilabschnitte 418 mit der Stützanordnung 406, 408, 409 einer benachbarten Vorrichtung 402, 404, 405 gekoppelt ist, wie dies beispielsweise in Figur 6a mit Bezug auf die Fundamente der Stützpfosten dargestellt ist.

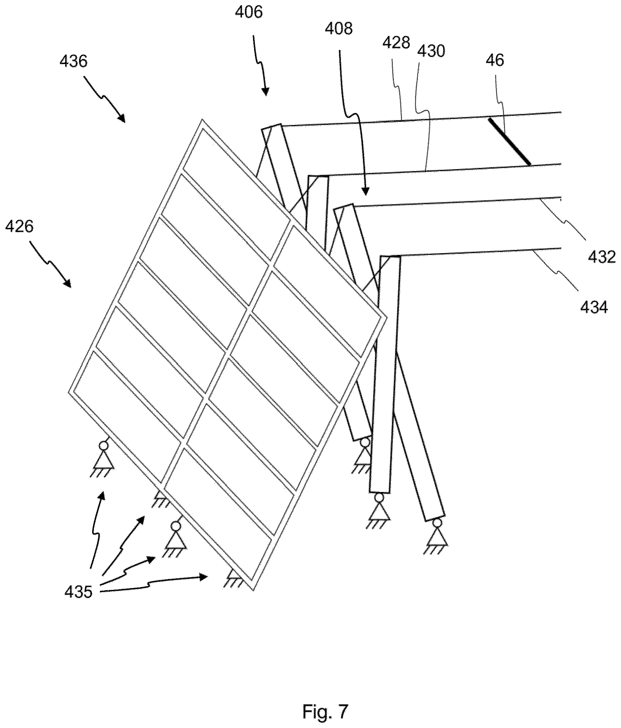

Figur 7 betrifft eine schematische Detaildarstellung einer Ausführungsform der Anordnung 400 zum Tragen von Energiegewinnungsmodulen, die auf der gemäß Figur 6a basiert. Gegenüber Figur 6a sind allerdings die Bereiche um die ersten Stützanordnungen 406, 408 im Detail dargestellt. Zusätzlich zu der Anordnung 400 gemäß Figur 6a sind allerdings zusätzliche Energiegewinnungsmodule 426 an der Anordnung 400 angeordnet. Genauer gesagt sind die zusätzlichen Energiegewinnungsmodule 426 nicht an den Tragseilabschnitten 428, 430, 432, 434 im Bereich zwischen den ersten Stützanordnungen 406, 408 und den zweiten Stützanordnungen 410, 412 angeordnet, sondern an den Tragseilabschnitten 428, 430, 432, 434 im Bereich zwischen den ersten Stützanordnungen 406, 408 und dem Untergrund bzw. den Fundamenten 435, mittels denen die Tragseilabschnitte 428, 430, 432, 434 mit dem Untergrund gekoppelt sind. Dadurch können zusätzliche Energiemodule an einer jeweiligen ersten Vorrichtung 402 und der zweiten Vorrichtung 404 angeordnet werden. Zusätzlich oder alternativ können beliebige Bauteile wie Trapezblech, Glasscheiben, Windfangnetze, Schutzfolien etc. montiert werden, um beispielsweise Witterungsschutz (insbes. Windschutz) zu erzielen. Ferner können Zaunelemente, Stacheldraht etc. beispielsweise dort montiert werden, wo vorliegend die zusätzlichen Energiegewinnungsmodule 426 angeordnet sind, um so eine Zugangssperre für den dahinter liegenden Bereich zu erreichen. Somit kann beispielsweise ein Schutz gegen Vandalismus oder Wildtiere erzielt werden.

Die Tragseilabschnitte 428, 430, 432, 434 können dazu wie vorliegend derart mit dem Untergrund gekoppelt sein, dass zumindest einige der Tragseilabschnitte 428, 430, 432, 434 im Bereich zwischen der Kopplung mit dem Untergrund und vorliegend den ersten Stützanordnungen 406, 408 zumindest abschnittsweise im Wesentlichen in einer gemeinsamen Ebene angeordnet sind. Dies erleichtert es, die zusätzlichen Energiegewinnungsmodule 426 an der Anordnung 400 anzuordnen.

Es ist eine Lagerungskonstruktion 436 vorgesehen, auf der die exemplarisch dargestellten insgesamt zwölf zusätzlichen Energiegewinnungsmodule 426 in zwei parallelen Spalten angeordnet sind. Es versteht sich, dass die Lagerungskonstruktion 436 und die Anzahl und Anordnung der Energiegewinnungsmodule 426 abhängig von der Anzahl an nebeneinander angeordneten Vorrichtungen 10 bzw. 402, 404 ist. Die Lagerkonstruktion 436 kann alle oder auch lediglich nur einige nebeneinander angeordnete Vorrichtungen 10 bzw. 402, 404 erfassen. Ferner ist die Anzahl an nebeneinander angeordneten Vorrichtungen 10 bzw. 402, 404 im Wesentlichen beliebig bzw. abhängig von den lokalen Gegebenheiten. Die Lagerungskonstruktion 436 kann gemäß einer der vorangehend beschriebenen Trägerkonstruktionen ausgebildet sein - und/oder eine weitere, horizontale Tragseilebene umfassen - und auch entsprechend mit den Tragseilabschnitten 428, 430, 432, 434 oder einigen von diesen gekoppelt sein. Aus Gründen der Einfachheit ist die Verlagerungskonstruktion 436 exemplarisch als Platte dargestellt.

Es kann vorgesehen sein, die zusätzlichen Energiegewinnungsmodule 426 gegenüber dem Untergrund beabstandet anzuordnen, sodass beispielsweise am Untergrund vorhandene Graswuchs keine Verschattung auf eines der zusätzlichen Energiegewinnungsmodule 426 ausübt.

Die zusätzlichen Energiegewinnungsmodule 426 an einer erfindungsgemäßen Anordnung 400 oder einer erfindungsgemäßen Vorrichtung 10 vorzusehen, ist mit dem Vorteil verbunden, zusätzliche Flächen zur Energiegewinnung zu nutzen. Abhängig von beispielsweise der Anzahl der nebeneinander angeordneten Vorrichtungen 402, 404 kann die Anzahl an zusätzlichen Energiegewinnungsmodulen 426 und/oder die Größe der Lagerungskonstruktion 436 gewählt werden. Es versteht sich, dass eine Anordnung der zusätzlichen Energiegewinnungsmodule 426 dann besonders vorteilhaft ist, wenn eine Vielzahl an nebeneinander angeordneten Vorrichtungen 10 bzw. 402, 404 vorgesehen ist, beispielsweise zumindest 10 oder zumindest 100. Es versteht sich ferner, dass die zusätzlichen Energiegewinnungsmodule 426 besonders dann vorteilhaft ist, wenn im Bereich vor und oberhalb der zusätzlichen Energiegewinnungsmodule 426 keine Verschattung auftritt.

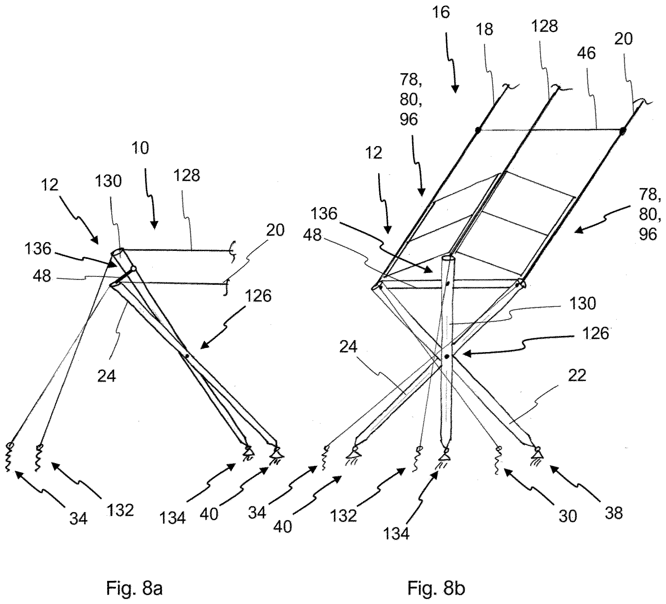

Figur 8a betrifft eine schematische Detaildarstellung einer Seitenansicht der Stützanordnung 12 gemäß einer Ausführungsform der erfindungsgemäßen Vorrichtung 10 und Figur 8b eine schematische Detaildarstellung der Ausführungsform der erfindungsgemäßen Vorrichtung 10. Gemäß dieser Ausführungsform umfasst die Tragseilanordnung 16 einen dritten Tragseilabschnitt 128. Der dritte Tragseilabschnitt 128 ist zumindest zwischen der ersten Stützanordnung 12 und der nicht dargestellten zweiten Stützanordnung 14 freitragend angeordnet und verbindet die erste und die zweite Stützanordnung 12, 14 miteinander. Ferner ist der dritte Tragseilabschnitt 128 im Bereich zwischen, bevorzugt wie vorliegend mittig zwischen, dem ersten und dem zweiten Tragseilabschnitt 18, 20 angeordnet. Ferner ist der dritte Tragseilabschnitt 128 höher angeordnet bzw. relativ zu dem Untergrund zumindest in dem Bereich zwischen der ersten und der zweiten Stützanordnung 12, 14 größer beabstandet als der erste und der zweite Tragseilabschnitt 18, 20.

Die erste Stützanordnung 12 weist einen dritten Stützpfosten 130 auf, der den dritten Tragseilabschnitt 128 gegenüber dem Untergrund zumindest im Bereich der ersten Stützanordnung 12 hält. Wie auch die anderen Tragseilabschnitte 18, 20 mit dem jeweiligen oberen Ende des zugehörigen Stützpfostens 22, 24 gekoppelt sind, ist auch der dritte Tragseilabschnitt 128 mit einem oberen Ende des dritten Stützpfostens 130 gekoppelt. Ferner ist der dritte Tragseilabschnitt 128 abseits des Bereichs zwischen der ersten und der zweiten Stützanordnung 12, 14 mit dem Untergrund über eine Fundament 132 gekoppelt, das wie vorliegend als Erdanker ausgebildet sein kann. Ferner ist der dritte Stützpfosten 130 mit dem Untergrund über eine Fundament 134 gekoppelt. Auch der dritte Stützpfosten 130 kann bei seitlicher Betrachtung gegenüber dem Untergrund geneigt angeordnet sein, wie dies aus Figur 8a hervorgeht, in der aus Gründen der besseren Übersicht auf eine Darstellung des ersten Tragseilabschnitts 18 und zugehöriger Merkmale verzichtet wurde. Es kann - wie in Figur 8a vereinfacht dargestellt - vorgesehen sein, dass die oberen Enden der Stützpfosten 22, 24, 130, insbesondere im Bereich der Kopplung mit dem jeweiligen Tragseilabschnitt 18, 20, 128, in einer gemeinsamen Ebene angeordnet sind. Diese Ebene kann gegenüber dem Untergrund im Wesentlichen senkrecht angeordnet sein. Um dies zu erreichen, kann der dritte Stützpfosten 130 in einem anderen, insbesondere größeren, Winkel gegenüber dem Untergrund angeordnet sein als der erste und/oder zweite Stützpfosten 22, 24, wie dies in Figur 8a der Fall ist.

Der dritte Stützpfosten 130 kann ferner über die Kopplungsanordnung 126 oder eine zusätzliche Kopplungsanordnung mit dem ersten und dem zweiten Stützpfosten 22, 24 gekoppelt sein. Vorliegend ist der dritte Stützpfosten 130 ferner mit dem Stützpfeilerstabilisierungselement 48 über eine zusätzliche Kopplungsanordnung 136 gekoppelt. Ferner ist das Stützpfeilerstabilisierungselement 48 ebenfalls ähnlich einem der Stützpfosten 22, 24 ausgebildet. Der dritte Stützpfosten 130 überragt das Stützpfeilerstabilisierungselement 48 in der Höhenrichtung.

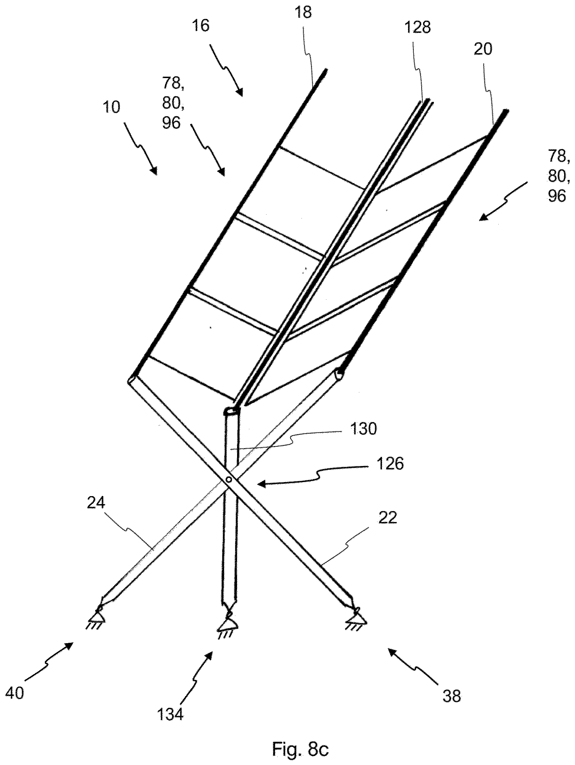

Figur 8c betrifft eine schematische Darstellung einer Ausführungsform in Anlehnung an Figur 8b, jedoch ist hier der dritte, mittlere Stützpfosten 130 kürzer als die beiden äußeren Stützpfosten 22, 24 ausgeführt. Anstelle der satteldachartigen Ausgestaltung der durch die Energiegewinnungsmodule aufgespannten Flächen wie in Figur 8b ergibt sich hier eine V-förmige, insbesondere V-trog-förmige, Ausgestaltung. In anderen Worten sind die Stützanordnungen - hier exemplarisch lediglich die erste Stützanordnung 12 gezeigt - derart ausgebildet, dass zumindest der dritte Tragseilabschnitt 128 im Vergleich zu dem ersten und dem zweiten Tragseilabschnitt 18, 20 niedriger angeordnet ist. Wie auch in Figur 8b, sind die Energiegewinnungsmodule 78, 80, 82 - exemplarisch hier lediglich drei Energiegewinnungsmodule 78, 80, 82 gezeigt - an der Tragseilanordnung 16 gehalten, wobei ein Teil der Energiegewinnungsmodule 78, 80, 82 von dem ersten und dem dritten Tragseilabschnitt 18, 128 und ein anderer Teil der Energiegewinnungsmodule 78, 80, 82 von dem zweiten und dem dritten Tragseilabschnitt 20, 128 getragen ist, wobei die Energiegewinnungsmodule 78, 80, 82 gemäß einer der beschriebenen Arten an den Tragseilabschnitten 18, 20, 128 angebracht bzw. von diesen getragen sein können. Exemplarisch sind die Energiegewinnungsmodule 78, 80, 82 zueinander beabstandet an den Tragseilabschnitten 18, 20, 128 angebracht, um beispielsweise einen gewissen Feuchtigkeitseintrag am Untergrund zu gewährleisten, wobei der Abstand wie in Figur 8b auch entfallen könnte.

In Hinblick auf die Sammlung von Niederschlags- oder Kondensationsflüssigkeiten ergeben sich durch die V-förmige Ausgestaltung Vorteile, weil zum Sammeln von Wasser anstelle zweier Sammelvorrichtungen an den beiden Traufkanten gem. Figur 8b nur eine zentrale Sammelvorrichtung in der Mitte, also im Bereich bzw. unterhalb des dritten Tragseilabschnitts 128, erforderlich ist. Auf die Darstellung von Spannseilanordnungen und Fundamenten wurde verzichtet. Sinngemäß gilt hier Gleiches wie bei Figur 8b.

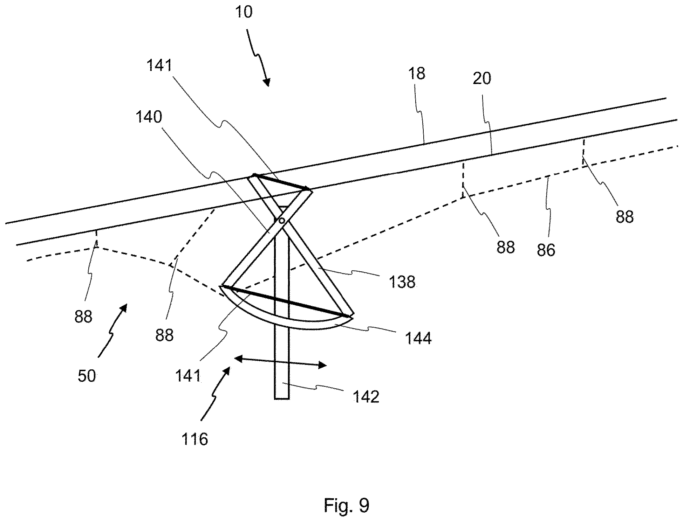

Figur 9 betrifft eine schematische Darstellung einer Ausführungsform der erfindungsgemäßen Vorrichtung 10, die dazu eingerichtet ist, die Ausrichtung der Tragseilanordnung 16 und der darauf angeordneten bzw. anzuordnenden Energiegewinnungsmodule relativ zu dem Untergrund zu ändern. Die erfindungsgemäße Vorrichtung umfasst den ersten Tragseilabschnitt 18 und den zweiten Tragseilabschnitt 20 wie bereits vorangehend beschrieben. In der vorliegenden Detaildarstellung gemäß Figur 9 ist jedoch die Hilfsstützanordnung 116 dargestellt, die zusätzlich oder alternativ einen ersten

Träger 138 und einen zweiten Träger 140 umfasst, die zueinander X-förmig angeordnet sind und miteinander im Bereich der Überlagerung miteinander gekoppelt sind. Man kann sagen, dass die Träger 138, 140 beispielsweise ähnlich wie die Stützpfosten 22, 24 bzw. die Hilfsstützpfosten 120, 122 ausgebildet sind, allerdings nicht direkt mit dem Untergrund gekoppelt sind. Stattdessen ist ein zentraler Pfosten 142 vorgesehen, der die Träger 138, 140 beabstandet zu dem Untergrund trägt. Ferner ist eine bogenförmige, insbesondere kreissegmentförmige, Führung 144 vorgesehen, die mit den Trägern 138, 140 und ferner mit dem zentralen Pfosten 152 gekoppelt ist.

Ferner kann eine vorliegend nicht näher dargestellte Verlagerungsanordnung 146 vorgesehen sein, die dazu eingerichtet ist, an der kreissegmentförmigen Führung 144 und dem zentralen Pfosten 142 anzugreifen und somit die kreissegmentförmige Führung 144 relativ zu dem zentralen Pfosten 142 zu verlagern. Die Verlagerungsanordnung 146 kann dazu eingerichtet sein, die Tragseilanordnung 16 zumindest im Bereich zwischen der ersten und der zweiten Stützanordnung 12, 14 gemäß einem tageszeitlichen Verlauf des Sonnenstands auszurichten. Die Verlagerungsanordnung 146 kann einen steuerbaren Antrieb aufweisen. Die kreissegmentförmige Führung 144 kann Teil der Verlagerungsanordnung 146 sein.

Die Konstruktion ist dergestalt ausgeführt, dass mehrere Stützenanordnungen (in Seilrichtung) hintereinander (wie aus Figur 5 bekannt) bzw. nebeneinander, wie beispielsweise aus Figuren 6 und 7 bekannt, angeordnet werden können, ohne die Bewegung zu behindern.

Exemplarisch ist vorliegend lediglich der Teil der Spannseilanordnung 50 dargestellt, der mit dem zweiten Tragseilabschnitt 20 gekoppelt ist. Um den Tragseilabschnitt 20 platzsparend zu stabilisieren, ist die Spannseilanordnung 50 mit dem Träger 140, insbesondere einem unteren Bereich des Trägers 140, gekoppelt. Analog zu Fig. 3 sind die Spannseilabschnitte unter der Tragseilanordnung 16 gekreuzt bzw. einander überlagernd angeordnet.

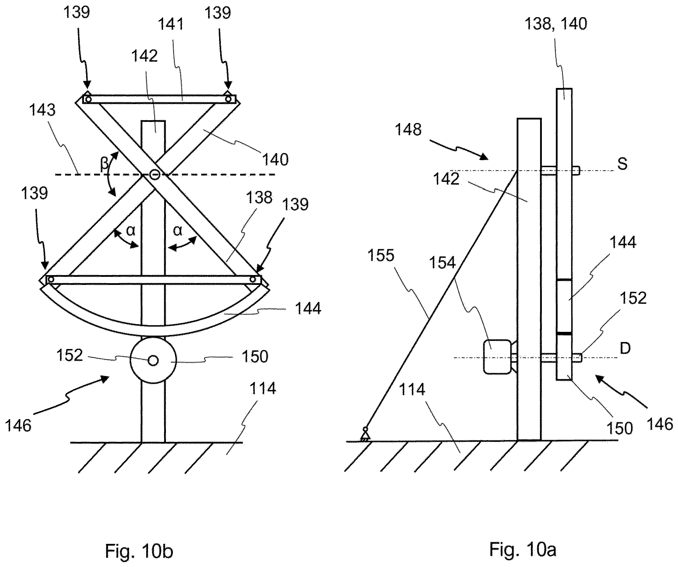

Figur 10a betrifft eine schematische Darstellung betreffend die Ausführungsform gemäß Figur 9. Die Darstellung des Hilfsstützpfostens 116 entspricht einer seitlichen Betrachtung von dem ersten Tragseilabschnitt 18 zu dem zweiten Tragseilabschnitt 20 in Figur 9.

Figur 10b betrifft eine schematische Darstellung betreffend die Ausführungsform gemäß Figur 9. Aus Gründen der Einfachheit sind keinerlei Tragseilabschnitte oder Spannseilanordnungen dargestellt, sondern nur beispielhafte Verbindungsbereiche 139 mit den Trägern 138, 140. Je nachdem wie massiv die kreissegmentförmige Führung 144 ausgeführt sein soll, kann ergänzend auch zumindest ein Stabilisierungselement 141 analog zu vorstehend beschriebenem Stützpfeilerstabilisierungselement 48 im Bereich oberhalb und/oder unterhalb der Überlagerung (Kreuzungspunkt) vorgesehen sein. Vorliegend sind beispielhaft zwei solche Stabilisierungselemente 141 vorgesehen, wobei die Verbindungsbereiche 139 rein exemplarisch mit denen der Stabilisierungselemente 141 zusammenfallen, jedoch auch separat dazu ausgebildet sein können.

Die Darstellung des Hilfsstützpfostens entspricht einer Betrachtung entlang der Tragseilabschnitte bzw. von der ersten Stützanordnung 12 zu der zweiten Stützanordnung 14. Der zentrale Pfosten 142 ist mit dessen einen Ende mit dem Untergrund 114 gekoppelt und ragt mit dessen anderen Ende von dem Untergrund empor. Ferner ist eine Lageranordnung 148 vorgesehen, wobei die Lageranordnung 148 die Träger 138, 140 mit dem zentralen Pfosten 142 drehbar um eine Schwenkachse S lagert. Dazu kann die Lageranordnung 148 beispielsweise als Bolzen ausgebildet sein, der zumindest drehbar relativ zu dem zentralen Pfosten 142 oder den Trägern 138, 140 gelagert ist.

Der Öffnungswinkel αkann den maximal möglichen Kippwinkel der Nachführungskonstruktion definieren, denn bei mehreren Elementen in Tragseilrichtung hintereinander sind an den unteren Enden der Träger 138, 140 Spannseilabschnitte der Spannseilanordnung befestigt, die in beide Richtungen, also in etwa in Tragseilrichtung, abgehen und bei Kippung in beiden Kipprichtungen nur bis maximal an oder nahezu an den zentralen Pfosten 142 herangeführt werden können.

Die Verlagerungsanordnung 146 umfasst ein Antriebsrad 150, das beispielsweise gemäß einem Zahnrad ausgebildet sein kann. Das Antriebsrad 150 ist ferner mit einer Antriebswelle 152 gekoppelt und auf dieser angeordnet, wobei die Antriebswelle 152 ferner mit einem Antrieb 154 gekoppelt ist, der dazu eingerichtet ist, die Antriebswelle 152 zusammen mit dem Antriebsrad 150, um die Drehachse D zu drehen. Die Antriebswelle 152 und der Antrieb 154 sind mit dem zentralen Pfosten 142 gekoppelt. Das Antriebsrad 150 kontaktiert an dessen Umfang die kreissegmentförmige Führung 144, die vorliegend ebenfalls eine Zahngeometrie umfasst, um mit den Zähnen des Antriebsrad 150 in Eingriff zu kommen. Die kreissegmentförmige Führung 144 ist gemäß einer Kreissegmentform bzw. Kreisringsegmentform um die Schwenkachse S ausgebildet.

Der zentrale Pfosten 142 kann als starr im Untergrund eingespannter, auskragender Träger ausgeführt sein und/oder er kann durch zusätzliche Seilelemente in Tragseilrichtung sowie quer dazu stabilisiert sein. Bezüglich Befestigung des zentralen Pfostens 142 ist zu unterscheiden, ob es sich um ein Mittelelement handelt (im Falle mehrerer Seilabschnitte in Tragseilrichtung hintereinander) oder um ein End-Element:
Bei Mittelelementen können sich die jeweiligen beidseitig oben und unten an den Trägerenden 138, 140 angreifenden Tragseil- und Spannseil-Kräfte in Längsrichtung der Tragseile kompensieren. Eine Sicherung gegen Kippen des zentralen Pfostens quer zur Tragseilrichtung kann erfolgen durch eine Hilfsseilanordnung 143 (wie exemplarisch in Figur 10b eingefügt), die beispielsweise auf Höhe des Lagers 148 mehrere nebeneinander angeordnete zentrale Pfosten 142 miteinander verbindet und an den Enden abgespannt wird.

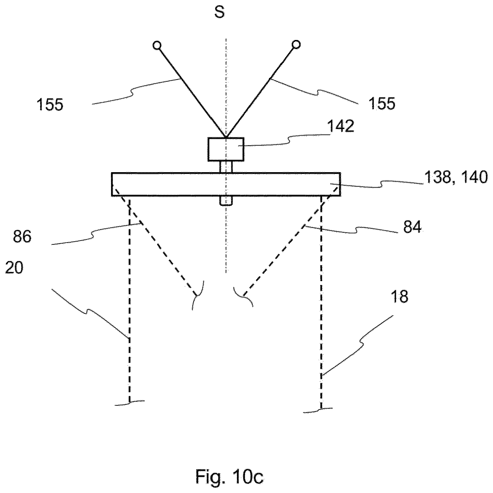

Bei Endelementen können die nur einseitig angreifenden Zugkräfte aus Trag- und Spannseilen durch eine oder mehrere zusätzliche Seilanordnungen 155 abzufangen sein (analog zu Tragseil-Verankerungen auf Fig. 1). Gegen Kippen in Richtung quer zur Tragseilrichtung kann bei Endelementen ebenso wie bei Mittelelementen eine Hilfsseilanordnung 143 dienen und/oder es sind beispielsweise mindestens zwei zusätzliche Seilanordnungen 155 vorzusehen. Diese können der Verlängerungslinie der Tragseilabschnitte abweichen (siehe Figur 10 c). Der in Figur 10a dargestellte Pfosten 142 betrifft sogenannte Endelemente. Er kann jedoch auch als Mittelelement vorgesehen sein, wobei in diesem Fall die Seilanordnung 155 entfallen kann. Der in Figur 10 b dargestellte Pfosten 142 betrifft Endelemente und Mittelelemente.

Es versteht sich, dass auch die anderen Stützanordnungen 12, 14 und/oder die anderen Hilfsstützanordnung 118 gemäß der vorliegenden Hilfsstützanordnung 116 ausgebildet sein können. Insbesondere können alle Stützanordnungen bzw. Hilfsstützanordnungen der Vorrichtung 10 entsprechend ausgeführt sein. So kann die Vorrichtung 10 insgesamt dazu eingerichtet sein, die auf der Tragseilanordnung 16 zumindest im Bereich zwischen der ersten und der zweiten Stützanordnung 12, 14 angeordneten Energiegewinnungsmodule gemäß einem Sonnenstand auszurichten und/oder kontinuierlich nachzuführen.

Figur 10c betrifft eine vereinfachte, schematische Draufsicht der in Figur 10b dargestellten Ausführungsform. Es sind zwei Seilanordnungen 155 vorgesehen, die in einem Winkel zueinander angeordnet sind und den Pfosten 142 mit dem Untergrund koppeln, um diesen gegen Verkippung aufgrund der wirkenden Tragseil- und Spannseilkräfte sowie gegen Verkippung in Richtung quer zur Tragseilrichtung zu sichern. Statt zwei Seilanordnungen 155 könnten auch nur eine (dann insbesondere in Verbindung mit Hilfsseilanordnung 143) oder auch drei oder mehr Seilanordnungen vorgesehen sein. Ferner sind die Tragseilabschnitte 18, 20 und die Spannseilabschnitte 84, 86 teilweise und zumindest für den Bereich zwischen den Stützanordnungen dargestellt. Sie greifen, wenn auch an unterschiedlichen Höhen, jeweils an den Trägern 138, 140 an.

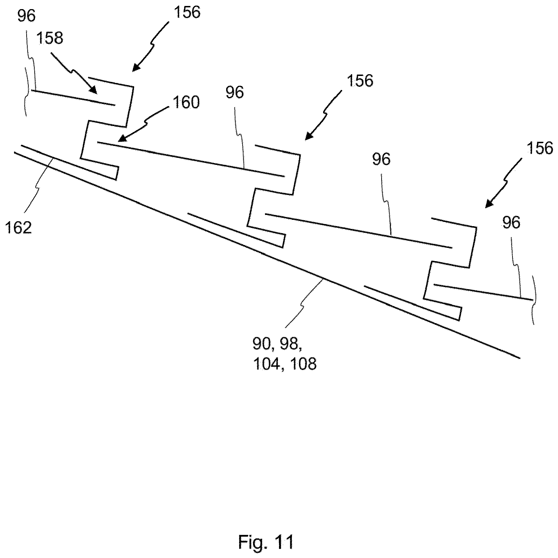

Figur 11 betrifft eine schematische Darstellung einer beispielhaften Anordnung von Energiegewinnungsmodulen 96, wie diese beispielsweise bei den Energiegewinnungsmodulen in Figuren 4a und 4b oder Figur 7 realisiert sein kann. Dabei sind die Energiegewinnungsmodule ähnlich wie Schindeln auf einem Hausdach angeordnet.

In Verbindung mit vorgenannten Seilkonstruktionen gem. Figuren 1 bis 8 lassen sich damit großflächig regendichte, wasserführende Ebenen oder Dächer erzeugen. Im Falle von Freiflächenanlagen auf landwirtschaftlichen Flächen sind diese wasserführenden Ebenen insbesondere auch geeignet, um Niederschlagsmengen gezielt zu sammeln und mittels geeigneter Ableitungen (z.B. "Dachrinnen (-Rohre)) Wasserspeichern zuzuführen.

Besonders vorteilhaft ist diese Befestigungsart in Verbindung mit sogenannten Laminaten, also rahmenlosen Energiegewinnungsmodulen wie beispielsweise rahmenlosen Doppelglas-Photovoltaikmodulen.

Jeweils benachbarte Energiegewinnungsmodule 96 sind mittels einer jeweiligen Halteklammer 156 miteinander gekoppelt, wobei die Halteklammer einen ersten Aufnahmebereich 158 zur Aufnahme eines ersten bzw. oberen Energiegewinnungsmoduls 96 und einen zweiten Aufnahmebereich 160 zur Aufnahme eines weiteren bzw. unteren Energiegewinnungsmoduls 96 aufweist. In den jeweiligen Aufnahmebereich 158, 160 kann das jeweilige Energiegewinnungsmodul 96 beispielsweise mit Hilfe einer Gummieinlage geklemmt angeordnet sein. Es versteht sich, dass die Halteklammern 156 lediglich schematisch dargestellt sind und in der Praxis die Energiegewinnungsmodule 96 möglichst lediglich an deren Rand kontaktieren, um Verschattung an dem Energiegewinnungsmodul 96 zu vermeiden und Kräfte vorzugsweise lediglich am Rand des Energiegewinnungsmoduls 96 einzuleiten. Die Halteklammer 156 weist ferner einen Anbringungsfortsatz 162 auf, um die Halteklammer 156 an der Tragseilanordnung 16 und/oder einer Trägerkonstruktion, beispielsweise eine der vorangehend beschriebenen Trägerkonstruktionen 90, 998, 104, 108 zu befestigen. Eine jeweilige Halteklammer 156 kann eine Tiefenerstreckung von wenigen Zentimetern oder Dezimetern aufweisen, sodass ein Energiegewinnungsmodul 96 beispielsweise entlang dessen unteren Kante mit mehreren Halteklammern 156 gekoppelt ist. Ferner kann die Halteklammer 156 sich entlang im Wesentlichen der gesamten Kante eines Energiegewinnungsmoduls erstrecken.

Die Halteklammer 156 kann aus einem Stück gefertigt sein oder mehrteilig aufgebaut sein. Insbesondere kann zwischen Aufnahmebereich 158 und 160 eine Verbindungsstelle zum Zusammensetzen einer zumindest zweiteiligen Ausgestaltung der Halteklammer 156 vorgesehen sein, um die Montage und Demontage der Schindelung zu erleichtern und insbesondere einen Ein- und Ausbau mittig platzierter, geschindelter Energiegewinnungsmodule 96 zu ermöglichen, ohne hierfür den Ausbau der benachbarten Module zu erfordern.

Insgesamt bewirkt die erfindungsgemäße Vorrichtung, dass große Spannweiten der Tragseilabschnitte und Durchfahrtshöhen im Bereich zwischen der ersten Stützanordnung und der zweiten Stützanordnung 12, 14 erzielt werden können. Außerdem ermöglicht es die erfindungsgemäße Vorrichtung 10, die Energiegewinnungsmodule auf der Tragseilanordnung 16 gemäß den einzuhaltenden Herstellervorgaben der Hersteller für Energiegewinnungsmodule zu halten. Man denke hierbei an einzuhaltende Belastungsgrenzen wie maximal zulässige Verformungen und/oder Krafteinwirkung. So können beispielsweise Spannungsspitzen in den Energiegewinnungsmodulen vermieden werden. Einen wesentlichen Beitrag zu der stabilen Anordnung der Energiegewinnungsmodule auf der Tragseilanordnung bewirkt die hohe mögliche, dreidimensionale Vorspannung der Tragseilanordnung 16, insbesondere der Tragseilabschnitte. Ferner trägt die dreidimensionale Ausgestaltung der Tragseilanordnung 16 und/oder der Spannseilanordnung 50, insbesondere die dreidimensionale Ausrichtung der Seilabschnitte, zu einer sehr stabilen Anordnung bei. Ferner ermöglicht die erfindungsgemäße Vorrichtung, dass an dem Untergrund lediglich geringfügige bauliche Maßnahmen vorgenommen werden müssen, um die erfindungsgemäße Vorrichtung 10 daran anzuordnen. Müssen Fundamente und/oder Erdanker an dem Untergrund installiert werden, ist der Aufwand dafür vergleichsweise gering. Außerdem können die Fundamente und/oder Erdanker nach der vorgesehenen Nutzungsdauer der erfindungsgemäßen Vorrichtung 10 einfach entfernt werden oder sogar im Untergrund verbleiben. Ein weiterer Vorteil der erfindungsgemäßen Vorrichtung 10 besteht in der vergleichsweise einfachen Errichtung. Ferner ist der Aufbau der erfindungsgemäßen Vorrichtung 10 gerade aufgrund der Tragseile der Tragseilanordnung und der Spannseile der Spannseilanordnung vergleichsweise günstig.

Daneben kann die erfindungsgemäße Vorrichtung auch dazu dienen, Energiegewinnungsmodule an Gebäuden mit Dächern von nicht ausreichender Tragfähigkeit anzuordnen. Die Stützanordnungen 12, 14 könnten dann beispielsweise an einem Mauerwerk, der Attika, einem statisch ausreichend stabilen Teil des Daches oder gar am Boden angebracht sein. Es versteht sich, dass die Höhe der Stützanordnungen 12, 14 dann vergleichsweise klein ausfallen könnte, da kein großer Abstand zu dem Dach nötig bzw. wünschenswert ist. Sofern Bezugszeichen in einer Figur verwendet, aber nicht im Zusammenhang mit dieser Figur beschrieben sind, so versteht es sich außerdem, dass diese Bezugszeichen im Zweifel Merkmale betreffen können, die im Zusammenhang mit anderen Figuren beschrieben sind.

## Patentansprüche

1. Vorrichtung (10) zum Tragen von Energiegewinnungsmodulen (78, 80, 96), insbesondere Solarmodulen, umfassend:
- eine erste Stützanordnung (12);
- eine zweite Stützanordnung (14); und
- eine Tragseilanordnung (16) umfassend zumindest einen ersten Tragseilabschnitt (18) und einen zweiten Tragseilabschnitt (20), wobei der erste und der zweite Tragseilabschnitt (18, 20) jeweils zwischen der ersten und der zweiten Stützanordnung (12, 14) zumindest abschnittsweise freitragend verlaufen und die erste und die zweite Stützanordnung (12, 14) miteinander verbinden;
wobei die erste und die zweite Stützanordnung (12, 14) dazu eingerichtet sind, die Tragseilanordnung (16) gegenüber einem Untergrund (114) derart zu halten, dass die Tragseilanordnung (16) zumindest im Bereich zwischen der ersten und der zweiten Stützanordnung (12, 14) beabstandet zu dem Untergrund (114) angeordnet ist; und
wobei wenigstens ein Energiegewinnungsmodul (78, 80, 96) an der Tragseilanordnung (16) zwischen der ersten und der zweiten Stützanordnung (12, 14) gehalten ist.

2. Vorrichtung (10) nach Anspruch 1, wobei der erste und der zweite Tragseilabschnitt (18, 20) im Bereich zwischen der ersten und der zweiten Stützanordnung (12, 14) zumindest abschnittsweise im Wesentlichen parallel und/oder gleichmäßig zueinander beabstandet angeordnet sind.

3. Vorrichtung (10) nach Anspruch 1 oder 2, wobei die erste und/oder die zweite Stützanordnung (12, 14) zumindest einen ersten und einen zweiten Stützpfeiler (22, 24; 26, 28) umfasst, wobei der erste Stützpfeiler (22, 26) dazu vorgesehen ist, den ersten Tragseilabschnitt (18) gegenüber dem Untergrund (114) zu halten, und der zweite Stützpfeiler dazu vorgesehen ist, den zweiten Tragseilabschnitt (20) gegenüber dem Untergrund (114) zu halten, wobei optional der erste und der zweite Stützpfeiler (22, 24; 26, 28) zueinander X-förmig und/oder V-förmig und/oder H-förmig ausgerichtet und/oder einander zumindest abschnittsweise überlagernd angeordnet sind.

4. Vorrichtung (10) nach Anspruch 3, wobei der erste Stützpfeiler (22, 26) zumindest den an dem ersten Stützpfeiler (22, 26) angeordneten Teil des ersten Tragseilabschnitts (18) mit einem ersten Abstand gegenüber dem Untergrund (114) anordnet und der zweite Stützpfeiler (24, 28) zumindest den an dem zweiten Stützpfeiler angeordneten Teil des zweiten Tragseilabschnitts (20) mit einem zweiten Abstand gegenüber dem Untergrund (114) anordnet, wobei die Beträge des ersten und des zweiten Abstands im Wesentlichen gleich oder unterschiedlich ist.

5. Vorrichtung (10) nach einem der vorangehenden Ansprüche, wobei zumindest der erste und/oder der zweite Tragseilabschnitt (18, 20) abseits des Bereichs zwischen der ersten und der zweiten Stützanordnung (12, 14) mit dem Untergrund (114) gekoppelt ist, um den Tragseilabschnitt (18) vorzuspannen und/oder zu stabilisieren.

6. Vorrichtung (10) nach einem der vorangehenden Ansprüche, wobei der erste und/oder zweite Stützpfeiler (22, 24; 26, 28) bei Betrachtung in Richtung quer zu dem ersten und/oder zweiten Tragseilabschnitt (18, 20) gegenüber dem Untergrund und/oder relativ zu der Richtung der Erdbeschleunigung geneigt, insbesondere nach außen geneigt, ausgerichtet sind.

7. Vorrichtung (10) nach Anspruch 6, wobei der mit den Tragseilabschnitten (18, 20) gekoppelte Bereich der ersten Stützanordnung (12) relativ zu der zweiten Stützanordnung (14) näher angeordnet ist als der mit dem Untergrund (114) gekoppelte Bereich der ersten Stützanordnung (12) relativ zu der zweiten Stützanordnung (14).

8. Vorrichtung (10) nach einem der vorangehenden Ansprüche, wobei die Tragseilanordnung (16), insbesondere zumindest der erste und der zweite Tragseilabschnitt (18, 20), im Bereich zwischen der ersten und der zweiten Stützanordnung (12, 14) eine Tragseilfläche aufspannt, wobei die Tragseilfläche eine imaginäre Verbindungslinie (73) umfasst, die senkrecht zu dem ersten und dem zweiten Tragseilabschnitt (18, 20) ausgerichtet ist und diese miteinander verbindet, wobei die Verbindungslinie (73) zumindest abschnittsweise parallel oder in einem Winkel zu dem Untergrund (114) ausgerichtet oder ausrichtbar ist.

9. Vorrichtung (10) nach einem der vorangehenden Ansprüche, wobei das wenigstens eine Energiegewinnungsmodul (78, 80, 96) zumindest mittels einer ersten Lageranordnung (81) und einer zweiten Lageranordnung (81) wenigstens mittelbar an einem der Tragseilabschnitte (18, 20) gehalten ist, wobei zumindest eine der Lageranordnungen (81) Spiel relativ zu dem Tragseilabschnitt (18, 20) in zumindest einer Richtung zulässt.

10. Vorrichtung (10) nach einem der vorangehenden Ansprüche, wobei das wenigstens eine Energiegewinnungsmodul (78, 80, 96) zumindest bei Betrachtung von oben zumindest teilweise, bevorzugt überwiegend, besonders bevorzugt vollständig, im Bereich zwischen dem ersten und/oder zweiten Tragseilabschnitt (18, 20) angeordnet ist, und/oder wobei das wenigstens eine Energiegewinnungsmodul (78, 80, 96) zumindest bei Betrachtung von oben zumindest teilweise, bevorzugt überwiegend, besonders bevorzugt vollständig, außerhalb des Bereichs zwischen dem ersten und/oder dem zweiten Tragseilabschnitt (18, 20) angeordnet ist.

11. Vorrichtung (10) nach einem der vorangehenden Ansprüche, ferner umfassend zumindest eine Trägerkonstruktion (90, 98, 104, 108), die mit der Tragseilanordnung (16) im Bereich zwischen der ersten und der zweiten Stützanordnung (12, 14) gekoppelt und dazu eingerichtet ist, das zumindest eine Energiegewinnungsmodul (78, 80, 96) zu lagern, wobei die Trägerkonstriktion vorzugsweise zumindest in Richtung quer zu dem ersten und/oder zweiten Tragseilabschnitt (18, 20) im Wesentlichen steif ausgebildet ist.

12. Vorrichtung (10) nach einem der vorangehenden Ansprüche, ferner umfassend zumindest ein Tragseilstabilisierungselement (46), das zumindest den ersten und den zweiten Tragseilabschnitt (18, 20) zumindest in einem Bereich zwischen der ersten und der zweiten Stützanordnung (12, 14) miteinander koppelt, wobei das Tragseilstabilisierungselement (46) dazu eingerichtet ist, einer relativen Verlagerung des ersten und zweiten Tragseilabschnitts (18, 20) im Bereich der Kopplung in Richtung aufeinander zu und/oder in Richtung voneinander weg entgegenzuwirken, bevorzugt zu dämpfen, besonders bevorzugt zu sperren.

13. Vorrichtung (10) nach einem der vorangehenden Ansprüche, ferner umfassend zumindest eine Spannseilanordnung (50, 52), die zumindest mittelbar mit der Tragseilanordnung (16) zumindest im Bereich zwischen der ersten und zweiten Stützanordnung (12, 14) verbunden ist und die Tragseilanordnung (16) stabilisiert, vorzugsweise mit dem Untergrund (114) und/oder zumindest einer der Stützanordnungen (12, 14) koppelt, insbesondere verspannt.

14. Vorrichtung (10) nach einem der vorangehenden Ansprüche, ferner umfassend zumindest eine Hilfsstützanordnung (116, 118), die dazu eingerichtet ist, die Tragseilanordnung (16) in einem Bereich zwischen der ersten und der zweiten Stützanordnung (12, 14) gegenüber dem Untergrund (114) zu halten und gegenüber diesem zu beabstanden.

15. Vorrichtung (10) nach Anspruch 14, wobei die Hilfsstützanordnung (116, 118) zumindest bei Betrachtung in Richtung quer zu dem ersten und/oder zweiten Tragseilabschnitt (18, 20) im Wesentlichen senkrecht, insbesondere im Wesentlichen senkrecht gegenüber dem Untergrund (114), ausgerichtet ist.

16. Vorrichtung (10) nach einem der vorangehenden Ansprüche, wobei die Tragseilanordnung (16) ferner zumindest einen dritten Tragseilabschnitt (128) umfasst, welcher zwischen der ersten und der zweiten Stützanordnung (12, 14) zumindest abschnittsweise freitragend verläuft und die erste und die zweite Stützanordnung (12, 14) miteinander verbindet, wobei optional:
- der dritte Tragseilabschnitt (128) im Bereich zwischen dem ersten und dem zweiten Tragseilabschnitt (18, 20) angeordnet ist; und/oder
- der dritte Tragseilabschnitt (128) relativ zu dem Untergrund (114) zumindest abschnittsweise mehr oder weniger beabstandet ist als der erste und/oder der zweite Tragseilabschnitt (18, 20).

17. Vorrichtung (10) nach Anspruch 16, wobei an dem ersten und dem dritten Tragseilabschnitt (18, 128) zumindest eines der Energiegewinnungsmodule (78, 80, 96) in einer ersten Ausrichtung angeordnet ist und an dem zweiten und an dem dritten Tragseilabschnitt (20, 128) zumindest ein weiteres der Energiegewinnungsmodule (78, 80, 96) gemäß einer zweiten Ausrichtung angeordnet ist, wobei die erste und die zweite Ausrichtung voneinander unterschiedlich sind.

18. Vorrichtung (10) nach Anspruch 17, wobei erste und die zweite Ausrichtung derart vorgesehen sind, dass die Energiegewinnungsmodule (78, 80, 96) gemäß einer V-Form oder Satteldachform angeordnet sind.

19. Vorrichtung (10) nach einem der vorangehenden Ansprüche, ferner umfassend zumindest eine Verlagerungsanordnung (146), die dazu eingerichtet ist, zumindest die Ausrichtung der Tragseilanordnung (16) relativ zu dem Untergrund (114) zumindest innerhalb eines vorgegebenen Winkelbereichs zu ändern, wobei die Verlagerungsanordnung (146) vorzugsweise steuerbar ist.

20. Anordnung (400) zum Tragen von Energiegewinnungsmodulen (78, 80, 96), umfassend zumindest eine erste und eine zweite Vorrichtung (10; 402, 404) zum Tragen von Energiegewinnungsmodulen (78, 80, 96) gemäß einem der Ansprüche 1 bis 19.

21. Anordnung (400) nach Anspruch 20, wobei zumindest die erste und die zweite Vorrichtung (10; 402, 404) zumindest hinsichtlich
- Abstand zwischen der jeweiligen ersten und zweiten Stützanordnung (12, 14); und/oder
- Abstand zwischen den jeweiligen ersten und zweiten Tragseilabschnitten (18, 20); und/oder
- Neigung der jeweiligen ersten Stützanordnung (12) relativ zu dem Untergrund (114) und/oder relativ zu der Lotrichtung; und/oder
- Neigung der jeweiligen zweiten Stützanordnung (14) relativ zu dem Untergrund (114) und/oder relativ zu der Lotrichtung; und/oder
- Neigung der jeweiligen Hilfsstützanordnung (116, 118) relativ zu dem Untergrund (114) und/oder relativ zu der Lotrichtung;
im Wesentlichen gleich ausgebildet sind.
